# EUROPEAN PATENT APPLICATION

(11) **EP 2 275 987 A1**
(43) Date of publication of application: **19.01.2011**
(21) Application number: 09725234.0
(22) Date of filing: 25.03.2009
(51) Int. Cl.: G06Q 50/00, A47F 5/00, G07G 1/01

(54) **ELECTRONIC INVENTORY TAG SYSTEM**

(30) Priority: 25.03.2008 JP 2008078930
(71) Applicant: Ishida Co., Ltd., Sakyo-ku Kyoto-shi Kyoto 606-8392 (JP)
(72) Inventor: NOBUTSUGU, Hideo, Ritto-shi Shiga 520-3026 (JP); TAGUCHI, Tsukasa, Tokyo 173-8552 (JP)
(74) Representative: Kastel, Stefan
(86) International application number: PCT/JP2009/055999
(87) International publication number: WO 2009/119686

(57) **Abstract**

In order to reduce the amount of time between correlation of a product with an electronic shelf label and display of product information on the electronic shelf label, and to prevent unnecessary information from being transmitted to an electronic shelf label, the product to be correlated and the electronic shelf label (5) are designated by an information processing terminal (180). Position specification information for specifying the position of a worker who is utilizing the information processing terminal (180) is inputted to the information processing terminal (180). An ESL server (10) correlates the product and electronic shelf label (5) designated by the information processing terminal (180) and acquires product information for the product from a product master. Based on the position specification information, the ESL server (10) specifies a communication group that includes the position of the worker in the communication area thereof, and causes the product information to be transmitted from transceivers (42) constituting the communication group.

## Description

### TECHNICAL FIELD

The present invention relates to an electronic shelf label system for providing an electronic shelf label in the vicinity of a product in order to display product information relating to the product.

### BACKGROUND ART

In supermarkets, convenience stores, and other stores, prices of merchandise in the store are usually centrally managed by a product master stored in a POS system or the like. Meanwhile, the customer (consumer) is usually informed of the price by a paper shelf label located in the position of a product. When this type of paper shelf label is used, since the shelf label must be managed by hand, pricing mistakes and other human errors are prone to occur. There is therefore a risk that an erroneous price that differs from the price that appears during checkout by a register of the POS system may be indicated to the customer.

In order to overcome such problems, electronic shelf label systems (ESL system/Electronic Shelf Label System) have recently been implemented, as also described in Japanese Laid-open Patent Publication No. 2004-265196.

In an electronic shelf label system, a portable electronic shelf label for displaying product information relating to a product, such as the price thereof, is placed so as to correspond to each product. Price information based on the product master is transmitted to each electronic shelf label, and the price is displayed on each electronic shelf label. The correct price that matches the price during checkout is thereby displayed in the electronic label, and the correct price is indicated to the customer.

### DISCLOSURE OF THE INVENTION

### <Problems to Be Solved by the Invention>

In the type of electronic shelf label system described above, since a plurality of electronic shelf labels are arranged in a wide area in a product sales space, a plurality of transmitting devices for transmitting product information from a server are attached to the ceiling or elsewhere in the sales space in order to ensure communication with the electronic shelf labels.

In the electronic shelf label system, electronic shelf labels are usually attached to product shelves, and during transmission of product information to an electronic shelf label, one transmission device is sometimes unable to ensure communication with the electronic shelf label, due to the effects of the product shelf to which the electronic shelf label is attached, and/or the surrounding product shelves. Therefore, in the electronic shelf label system, a plurality of transmission devices are simultaneously activated during transmission of product information to an electronic shelf label, and the same product information is transmitted to the electronic shelf label from a plurality of transmission devices.

When all of the transmission devices placed in the sales space are activated at the same time, since power consumption is extremely high, it is preferred that not all of the transmission devices be activated at once. Therefore, a configuration is sometimes adopted in which all of the transmission devices arranged in the sales space are divided into a plurality of communication groups so that a plurality of transmission devices are included in each group, and the transmission devices are controlled in units of communication groups. It is thereby possible to activate only one communication group that is capable of communicating with the electronic shelf label when product information is transmitted to a certain electronic shelf label, and the electronic shelf label can reliably receive the product information while power consumption is kept low.

In the electronic shelf label system, processing for correlating electronic shelf labels with products is also necessary at such times as when products are introduced or the sold products are changed. When an electronic shelf label is correlated with a product, the product information of the product is transmitted to the electronic shelf label, and the electronic shelf label displays the product information of the corresponding product.

For an electronic shelf label already displaying the product information of the corresponding product, since communication with a transmission device has already occurred, the communication group that is capable of communicating with the electronic shelf label is determined. Consequently, when the product information displayed by the electronic shelf label that corresponds to a product is changed, only the communication group that is capable of communicating with the electronic shelf label is activated, and communication groups that are not capable of communicating with the electronic shelf label are not activated.

In contrast, in a case in which the product information of a product corresponding to the electronic shelf label is transmitted for the first time immediately after the product and the electronic shelf label have been correlated, the communication group that is capable of communicating with the electronic shelf label has not been determined. Therefore, in this case, processing is necessary for sequentially activating the plurality of communication groups to determine the communication group that is capable of communicating with the electronic shelf label. It is therefore difficult to display the product information on the electronic shelf label immediately after the electronic shelf label has been correlated with a product, and a worker cannot perform other work for a long time until the product information is displayed on the electronic shelf label that has been correlated with a product.

### Work efficiency is reduced as a result.

When the plurality of communication groups are activated in sequence to determine a communication group that is capable of communicating with a certain electronic shelf label, unnecessary information is transmitted to electronic shelf labels that are capable of communicating with communication groups other than the communication group that is capable of communicating with the "certain electronic shelf label," and the electronic shelf label receive transmissions unnecessarily, leading to unproductive power consumption.

The present invention was developed in view of the problems described above, and an object of the present invention is to provide an electronic shelf label system whereby the amount of time between correlation of an electronic shelf label with a product and display of the product information on the electronic shelf label can be reduced, and unnecessary transmission of information to electronic shelf labels can be suppressed.

### <Means for Solving the Problems>

An electronic shelf label system according to a first aspect of the present invention comprises a plurality of electronic shelf labels, a storage unit, a plurality of transmitters, a transmission controller, a designating unit, an input unit, a link unit, a product information acquiring unit, and a specifying unit. The plurality of electronic shelf labels are disposed in the vicinity of a product, and display product information relating to the product. The storage unit stores a product master in which product information is registered for each product. The plurality of transmitters transmit the product information in the product master to the electronic shelf labels belonging to a communication area of a transmitter, the communication areas being mutually different. The transmission controller divides the plurality of transmitters into a plurality of communication groups and controls the plurality of transmitters in units of communication groups. The designating unit is provided to a portable information processing device, and designates a product and the electronic shelf label disposed in the vicinity of the product. The input unit receives inputting of position specification information for specifying the position of a worker who is utilizing the information processing device. The link unit for correlates the product and the electronic shelf label designated by the designating unit. The product information acquiring unit acquires product information for the product designated by the designating unit from the product master. The specifying unit specifies as an activation target group a communication group, among the plurality of communication groups that includes the position of the worker in the communication area thereof on the basis of the position specification information received by the input unit. The transmission controller causes the product information acquired by the product information acquiring unit to be transmitted by a transmitter, among the plurality of transmitters that belongs to the activation target group.

An electronic shelf label system according to a second aspect of the present invention is the electronic shelf label system according to the first aspect of the present invention, wherein a guide sign for providing guidance for a product sales floor is provided for each department of the sales floor in the product sales space in which the electronic shelf labels are placed. Department information indicating the corresponding department of the sales floor is displayed on the guide signs. The electronic shelf label system according to the second aspect of the present invention further comprises a second storage unit. The second storage unit stores a correlation between the department information and the communication group that includes the department of the sales floor indicated by the department information in the communication area thereof. The input unit receives the inputting of the department information as inputting of the position specification information. The specifying unit specifies the communication group corresponding to the department information received by the input unit and designates the communication group as the activation target group on the basis of the correlation.

An electronic shelf label system according to a third aspect of the present invention is the electronic shelf label system according to the first aspect of the present invention, wherein a plurality of product shelves on which products are placed are provided in the space in which the electronic shelf labels are placed. A shelf number is indicated on each of the plurality of product shelves. The electronic shelf label system according to the third aspect further comprises a second storage unit. The second storage unit stores a correlation between the shelf number and the communication group that includes a position of the product shelf specified by the shelf number in the communication area thereof. The input unit receives the inputting of the shelf number as inputting of the position specification information. The specifying unit specifies the communication group corresponding to the shelf number received by the input unit and designates the communication group as the activation target group on the basis of the correlation.

An electronic shelf label system according to a fourth aspect of the present invention is the electronic shelf label system according to the first aspect of the present invention, wherein product identification information for identifying the products is indicated on the products in the space in which the electronic shelf labels are placed, or product identification information for identifying the products is indicated on the electronic shelf labels correlated with the products. The electronic shelf label system according to the fourth aspect further comprises a second storage unit. The second storage unit stores a correlation between a product and the communication group that is capable of communicating with the electronic shelf label correlated with the product. The input unit receives the inputting of the product identification information of the product correlated with the electronic shelf label as inputting of the position specification information. The specifying unit specifies the communication group corresponding to the product specified by the product identification information received by the input unit and designates the communication group as the activation target group on the basis of the correlation.

An electronic shelf label system according to a fifth aspect of the present invention is the electronic shelf label system according to the first aspect of the present invention, wherein hard identification information for identifying the electronic shelf labels is indicated on the electronic shelf labels. The electronic shelf label system according to the fifth aspect further comprises a second storage unit. The second storage unit stores a correlation between the electronic shelf label correlated with a product and the communication group that is capable of communicating with the electronic shelf label. The input unit receives the inputting of the hard identification information of the electronic shelf label correlated with a product as inputting of the position specification information. The specifying unit specifies the communication group corresponding to the electronic shelf label specified by the hard identification information received by the input unit and designates the communication group as the activation target group on the basis of the correlation.

An electronic shelf label system according to a sixth aspect of the present invention is the electronic shelf label system according to the first aspect of the present invention, wherein the electronic shelf label correlated with a product displays second position specification information for specifying the position of the electronic shelf label. The input unit receives the inputting of the second position specification information as inputting of the position specification information.

An electronic shelf label system according to a seventh aspect of the present invention is the electronic shelf label system according to the sixth aspect of the present invention, wherein a product sales floor in a product sales space in which the electronic shelf labels are placed is divided into a plurality of departments. The electronic shelf label correlated with a product displays, as second position specification information, department information indicating the sales floor department in which the electronic shelf label is placed. The electronic shelf label system according to the seventh aspect further comprises a second storage unit. The second storage unit stores a correlation between the department information and the communication group that includes the sales floor department indicated by the department information in the communication area thereof. The input unit receives the inputting of the department information as inputting of the position specification information. The specifying unit specifies the communication group corresponding to the department information received by the input unit and designates the communication group as the activation target group on the basis of the correlation.

An electronic shelf label system according to an eighth aspect of the present invention is the electronic shelf label system according to the sixth aspect of the present invention, wherein a plurality of product shelves on which products are placed are provided in the space in which the electronic shelf labels are placed. A shelf number is assigned to each of the plurality of product shelves. The electronic shelf label correlated with a product displays the shelf number of the product shelf on which the product is placed as the second position specification information. The electronic shelf label system according to the eighth aspect further comprises a second storage unit. The second storage unit stores a correlation between the shelf number and the communication group that includes the position of the product shelf specified by the shelf number in the communication area thereof. The input unit receives the inputting of the shelf number as the inputting of the position specification information. The specifying unit specifies the communication group corresponding to the shelf number received by the input unit and designates the communication group as the activation target group on the basis of the correlation.

An electronic shelf label system according to a ninth aspect of the present invention is the electronic shelf label system according to the sixth aspect of the present invention, wherein the electronic shelf label correlated with a product displays, as the second position specification information, communication-capable group information indicating the communication group that is capable of communicating with the electronic shelf label. The input unit receives the inputting of the communication-capable group information as the inputting of the position specification information. The specifying unit designates as the activation target group the communication group indicated by the communication-capable group information received by the input unit.

An electronic shelf label system according to a tenth aspect of the present invention is the electronic shelf label system according to any of the first through ninth aspects of the present invention, wherein the input unit is provided to the information processing device.

An electronic shelf label system according to an eleventh aspect of the present invention comprises a plurality of electronic shelf labels, a storage unit, a plurality of transmitters, a transmission controller, a designating unit, a position detector, a link unit, and a specifying unit. The plurality of electronic shelf labels are disposed in the vicinity of the product, and display product information relating to a product. The storage unit stores a product master in which product information is registered for each product. The plurality of transmitters transmit the product information in the product master to the electronic shelf labels belonging to a communication area of a transmitter, the communication areas being mutually different. The transmission controller divides the plurality of transmitters into a plurality of communication groups and controls the plurality of transmitters in units of communication groups. The designating unit is provided to a portable information processing device, and designates a product and the electronic shelf label disposed in the vicinity of the product. The position detector detects the position of a worker who is utilizing the information processing device. The link unit correlates the product and the electronic shelf label designated by the designating unit. The product information acquiring unit acquires product information for the product designated by the designating unit from the product master. The specifying unit specifies as an activation target group a communication group, among the plurality of communication groups, that includes the position of the worker in the communication area thereof on the basis of detection results produced by the position detector. The transmission controller causes the product information acquired by the product information acquiring unit to be transmitted by a transmitter, among the plurality of transmitters, that belongs to the activation target group.

### <Effect of the Invention>

According to the first aspect of the present invention, the communication group that includes the position of a worker in the communication area thereof is specified as an activation target group on the basis of position specification information for specifying the position of a worker who is utilizing the portable information processing device. A transmitter belonging to the activation target group transmits the product information in the product master for the product designated by the designating unit. Consequently, when a worker designates an electronic shelf label with the information processing device in the vicinity of the electronic shelf label that is correlated with a product, the communication group that is capable of communicating with the electronic shelf label can be promptly specified, and the product information can be promptly transmitted to the electronic shelf label. As a result, the amount of time between correlation of an electronic shelf label with a product and display of the product information on the electronic shelf label can be reduced.

Since it is also possible to prevent transmission of product information from communication groups other than the communication group that is capable of communicating with the electronic shelf label designated by the designating unit, electronic shelf labels capable of communicating with other communication groups can be prevented from receiving unnecessary information, and unnecessary power consumption by those electronic shelf labels can be reduced.

According to the second aspect of the present invention, since the input unit receives the inputting of the department information as inputting of position specification information, a worker utilizing the information processing device can input the department information of a guide sign located near the worker's position to the input unit. The worker can thereby easily input the position specification information to the input unit, and work efficiency is enhanced.

According to the third aspect of the present invention, since the input unit receives the inputting of the shelf number shown on the product shelf as inputting of the position specification information, a worker utilizing the information processing device can input the shelf number of a product shelf located near the worker's position to the input unit. The worker can thereby easily input the position specification information to the input unit, and work efficiency is enhanced.

According to the fourth aspect of the present invention, since the input unit receives the inputting of the product identification information as inputting of the position specification information, a worker utilizing the information processing device can input the product identification information indicated on a product or electronic shelf label located near the worker's position to the input unit. The worker can thereby easily input the position specification information to the input unit, and work efficiency is enhanced.

According to the fifth aspect of the present invention, since the input unit receives the inputting of the hard identification information as inputting of the position specification information, a worker utilizing the information processing device can input the hard identification information indicated on an electronic shelf label located near the worker's position to the input unit. The worker can thereby easily input the position specification information to the input unit, and work efficiency is enhanced.

According to the sixth aspect of the present invention, since the input unit receives the inputting of the second position specification information displayed by the electronic shelf label correlated with a product as inputting of the position specification information, a worker utilizing the information processing device can input the second position specification information displayed by an electronic shelf label located near the worker's position to the input unit. The worker can thereby easily input the position specification information to the input unit, and work efficiency is enhanced.

According to the seventh aspect of the present invention, since the input unit receives the inputting of the department information displayed by the electronic shelf label as inputting of the position specification information, a worker utilizing the information processing device can input the department information displayed by an electronic shelf label located near the worker's position to the input unit. The worker can thereby easily input the position specification information to the input unit, and work efficiency is enhanced.

According to the eighth aspect of the present invention, since the input unit receives the inputting of the shelf number displayed by the electronic shelf label as inputting of the position specification information, a worker utilizing the information processing device can input the shelf number displayed by an electronic shelf label located near the worker's position to the input unit. The worker can thereby easily input the position specification information to the input unit, and work efficiency is enhanced.

According to the ninth aspect of the present invention, since the input unit receives the inputting of the communication-capable group information displayed by the electronic shelf label as inputting of the position specification information, a worker utilizing the information processing device can input the communication-capable group information displayed by an electronic shelf label located near the worker's position to the input unit. The worker can thereby easily input the position specification information to the input unit, and work efficiency is enhanced.

According to the tenth aspect of the present invention, since the input unit is provided to the information processing device, a worker can input the position specification information to the information processing device that is used when a product is correlated with an electronic shelf label. Inputting of the position specification information by the worker can thereby be simplified.

According to the eleventh aspect of the present invention, the communication group that includes the position of the worker in the communication area thereof is specified as the activation target group on the basis of the results of detecting the position of the worker who is utilizing the portable information processing device, and a transmitter belonging to the activation target group transmits the product information in the product master for a product designated by the designating unit. Consequently, when a worker designates an electronic shelf label with the information processing device in the vicinity of the electronic shelf label that is correlated with a product, the communication group that is capable of communicating with the electronic shelf label can be promptly specified, and the product information can be promptly transmitted to the electronic shelf label. As a result, the amount of time between correlation of an electronic shelf label with a product and display of the product information on the electronic shelf label can be reduced.

Since it is also possible to prevent transmission of product information from communication groups other than the communication group that is capable of communicating with the electronic shelf label designated by the designating unit, electronic shelf labels capable of communicating with other communication groups can be prevented from receiving unnecessary information, and unnecessary power consumption by those electronic shelf labels can be reduced.

### BRIEF DESCRIPTION OF THE DRAWINGS

FIG 1 is a view showing the configuration of a store information system including the electronic shelf label system according to a first embodiment.
FIG 2 is a view showing the arrangement of the electronic shelf labels provided to the electronic shelf label system according to the first embodiment.
FIG 3 is a view showing the arrangement of the transceivers according to the first embodiment in the sales space.
FIG 4 is a view showing the arrangement of transceivers according to the first embodiment in the sales space.
FIG 5 is a view showing a guide sign according to the first embodiment.
FIG 6 is a view showing the configuration of the ESL server according to the first embodiment.
FIG 7 is a view showing a link file according to the first embodiment.
FIG 8 is a view showing a translation master according to the first embodiment.
FIG 9 is a view showing the configuration of an information processing terminal according to the first embodiment.
FIG 10 is a view showing the configuration of an electronic shelf label according to the first embodiment.
FIG 11 is a view showing an example of the display of the electronic shelf label according to the first embodiment.
FIG 12 is a flowchart showing the operation of the electronic shelf label system according to the first embodiment.
FIG 13 is a flowchart showing the operation of the electronic shelf label system according to the first embodiment.
FIG 14 is a view showing a modification of the link file according to the first embodiment.
FIG 15 is a view showing the configuration of a modification of the information processing terminal according to the first embodiment.
FIG 16 is a flowchart showing the operation of a modification of the electronic shelf label system according to the first embodiment.
FIG 17 is a view showing an example of the display of a modification of the information processing terminal according to the first embodiment.
FIG 18 is a view showing an example of the display of a modification of the electronic shelf label according to the first embodiment.
FIG 19 is a view showing an example of the display of a modification of the electronic shelf label according to the first embodiment.
FIG 20 is a view showing an example of the display of a modification of the electronic shelf label according to the first embodiment.
FIG 21 is a view showing the configuration of the ESL server according to a second embodiment.
FIG 22 is a view showing the configuration of the information processing terminal according to the second embodiment.
FIG 23 is a flowchart showing the operation of the electronic shelf label system according to the second embodiment.

### REFERENCE SIGNS LIST

- 1: electronic shelf label system
- 5: electronic shelf label
- 6: product
- 11: CPU
- 14: hard disk
- 42: transceiver
- 60: product shelf
- 60a: shelf number
- 90: sales space
- 95: guide sign
- 95a: department name
- 101: product master
- 102: link file
- 103: translation master
- 180: information processing terminal
- 181: CPU
- 182: storage unit
- 184: operating unit
- 185: barcode reader
- 186: wireless LAN communication unit
- 188: position detector
- 420: communication group

### BEST MODE FOR CARRYING OUT THE INVENTION

### <First Embodiment>

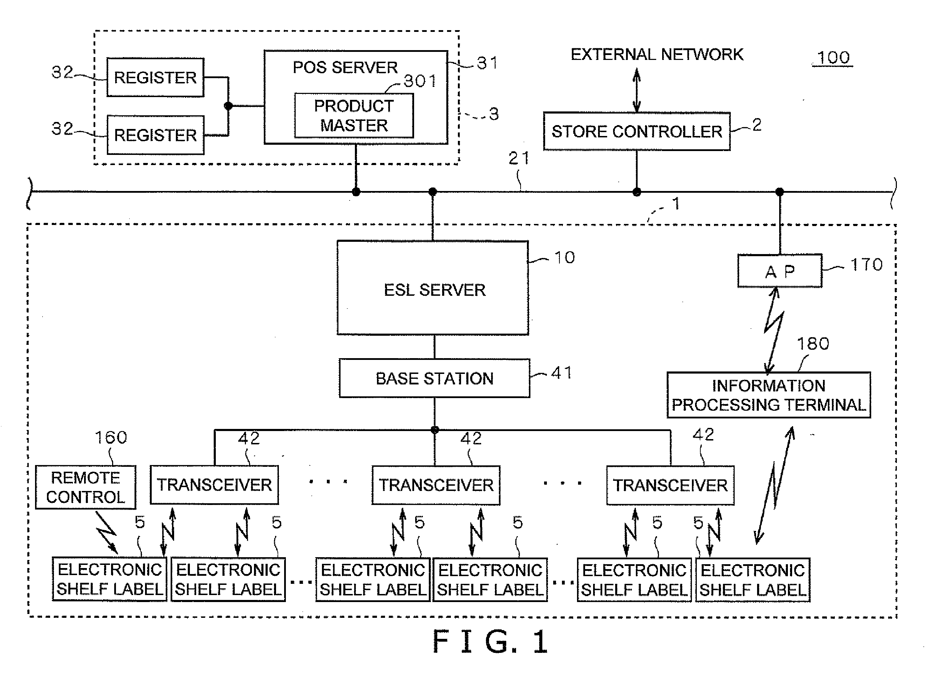

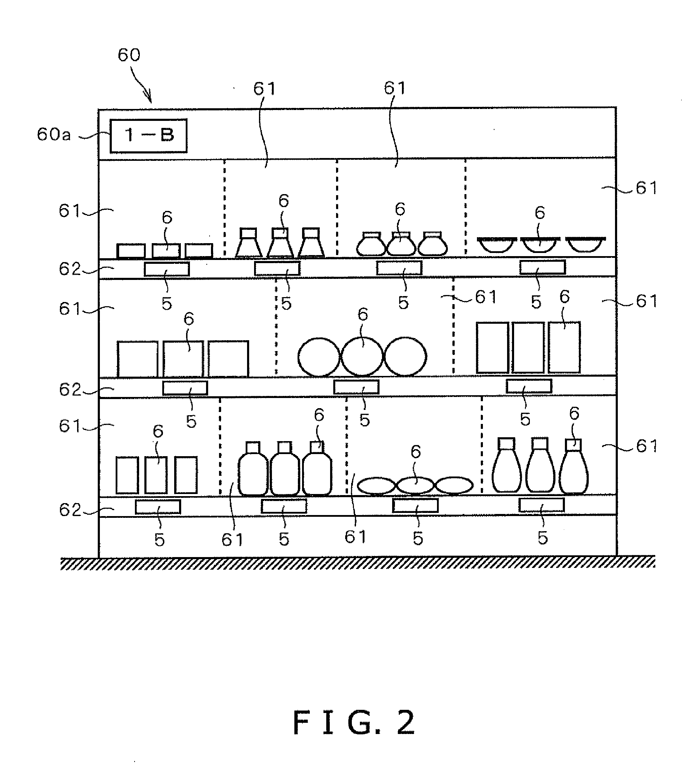

FIG 1 is a view showing an example of the configuration of a store information system 100 which includes an electronic shelf label system 1 according to a first embodiment of the present invention. FIG 2 is a view showing the arrangement of electronic shelf labels 5 provided to the electronic shelf label system 1 on a product shelf 60 of a store. The electronic shelf label system 1 according to the first embodiment is a system introduced into a supermarket and/or convenience store or other store. In the electronic shelf label system 1 of the present embodiment, each of portable electronic shelf labels 5 for displaying prices and other product information relating to products is arranged so as to correspond to each of the products 6. Price information based on a product master is transmitted to the electronic shelf labels 5, and the prices are displayed by the electronic shelf labels 5. The correct price that matches the price appearing during checkout is thereby displayed in the electronic shelf labels 5, and the correct price is communicated to a customer.

As shown in FIG 2, the product shelf 60 is divided into spaces referred to as faces 61, and products 6 of the same type are grouped together and mounted in each face 61. A barcode indicating a product code as product identification information for identifying the type of product is shown on a label or printed on each product 6.

Each of electronic shelf labels 5 is attached in positions corresponding to each of the faces 61 on frames 62 of the product shelf 60. Specifically, a single electronic shelf label 5 corresponds to a single product 6 (strictly speaking, a single type of product), and each electronic shelf label 5 is placed in the vicinity of the product 6 to which the device (electronic shelf label 5) corresponds. Each electronic shelf label 5 is provided with a display, and the price of the product 6 to which the device (electronic shelf label 5) corresponds is displayed on the display. The price of the product 6 is thereby communicated to the consumer.

When a placement change or other change of the products 6 occurs, the position and/or size of each face 61 also changes. In order to adapt to such a change in a face 61, rather than the positions of the electronic shelf labels 5 being fixed, the electronic shelf labels 5 can be removed from the frames 62 and replaced in another position. In the first embodiment, a plurality of product shelves 60 such as the one shown in FIG 1 are arranged in the sales space of a store, and a specific shelf number is assigned to each product shelf 60. The assigned shelf number 60a is shown on a label or printed on each product shelf 60, as shown in FIG 2.

As shown in FIG 1, the store information system 100 is provided with the electronic shelf label system 1, as well as with a store controller 2 and a POS system 3. A POS server 31 provided to the POS system 3, and an ESL server 10 provided to the electronic shelf label system 1 are connected to the store controller 2 via a LAN 21. Data communication between the store controller 2, the POS system 3, and the electronic shelf label system 1 is thereby made possible.

The store controller 2 is composed of a common computer, and functions as a device for managing the store information system 100 as a whole. The store controller 2 is connected to the Internet or another external network, and is capable of communicating via the external network with a server device or other computer disposed at a headquarters center for general management of the store.

The POS system 3 is a system for collecting and analyzing information relating to the sale of a product 6 at the time of the sale, and is provided with the POS server 31 for managing the POS system 3 as a whole, as well as with a plurality of registers 32 for performing checkout of the products 6. The POS server 31 and each register 32 are connected by a dedicated communication cable.

The POS server 31 is composed of a common computer, and a product master 301 indicating prices and various other types of information relating to the products 6 is stored on a hard disk of the POS server 31. Checkout of the products 6 is performed in each of the plurality of registers 32 on the basis of the prices described in the product master 301.

Information relating to all the products 6 in the store is centrally managed by the product master 301. The information described in the product master 301 includes a product code, a product name as the name of each product 6, a normal price as the normal price, a special price as the price during a special sale, a sale period as the period during which a special sale is in effect, a sold quantity, an inventory quantity, an order quantity as the quantity delivered in a single order, and other information. The product information described in the product master 301 is usually changed based on an instruction (information received by the store controller 2) from the computer at the headquarters center, but it is also possible to change the product information by directly operating the POS server 31.

The electronic shelf label system 1 is provided with the plurality of electronic shelf labels 5 described above, the ESL server 10, a base station 41, N (N ≥ 2) transceivers 42, a portable remote control 160 used when switching the display of the electronic shelf labels 5, and a portable information processing terminal 180 used when correlating data between the electronic shelf labels 5 and the products 6 and/or when switching the display of the electronic shelf labels 5. Infrared signals are outputted from the remote control 160 and the information processing terminal 180, and the infrared signals are received by the electronic shelf labels 5, whereby the display of the electronic shelf labels 5 is changed.

Each of the transceivers 42 communicates by infrared with the electronic shelf labels 5. The base station 41 is connected to the ESL server 10 and the transceivers 42, and functions as a relay device for signals between the ESL server 10 and the transceivers 42.

The transceivers 42 receive the product information from the ESL server 10 via the base station 41 and transmit infrared signals including the received product information to the electronic shelf labels 5. The transceivers 42 also receive infrared signals transmitted from the electronic shelf labels 5. The transceivers 42 thus function as transmitters as well as receivers.

The N transceivers 42 are arranged at a substantially constant distance apart in the ceiling or elsewhere in the sales space. The N transceivers 42 also each have different communication areas, and the communication areas partially overlap between adjacent transceivers 42. All of the electronic shelf labels 5 arranged in the sales space of the store are thereby able to communicate with at least one of the N transceivers 42.

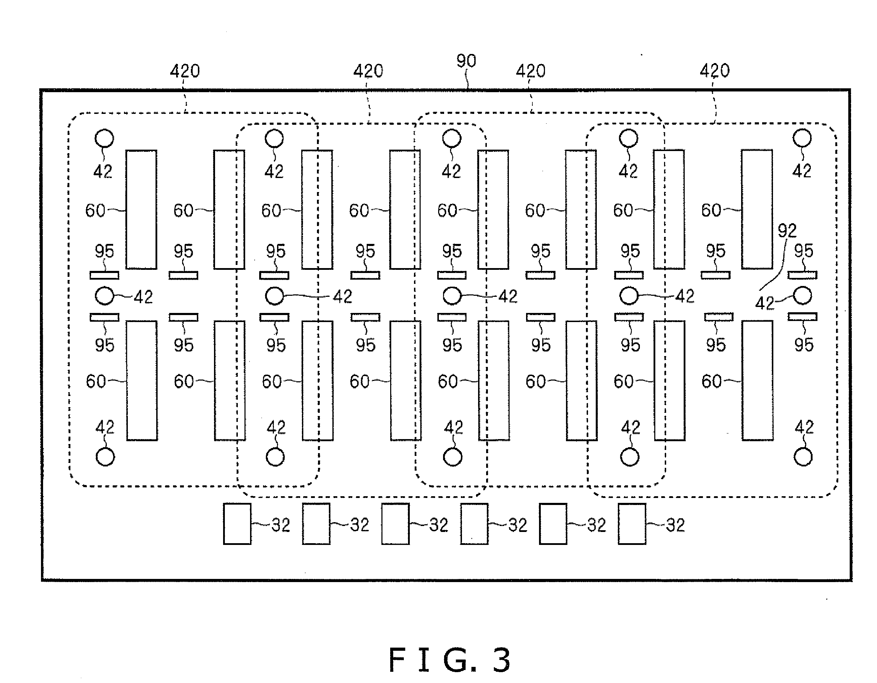

FIG 3 is a view showing the arrangement of the N transceivers 42 in the sales space 90 of a store. As shown in FIG 3, a plurality of registers 32 are arranged in the sales space 90, and a plurality of product shelves 60 are also arranged in the sales space 90. The N (N = 15 in the example shown in FIG 3) transceivers 42 are arranged in a matrix, for example, at a distance from each other in the ceiling of the sales space 90.

In the electronic shelf label system 1 according to the first embodiment, the N transceivers 42 are divided into M (2 ≤ M ≤ N) communication groups 420, as shown in FIG 3, and are activated as units of communication groups. The transceivers 42 of only a single communication group 420 are activated for each transmission of an infrared signal to an electronic shelf label 5. The driving power required for one transmission of an infrared signal to an electronic shelf label 5 can thereby be minimized, and an inexpensive base station 41 having low driving capability can be used.

In the first embodiment, the communication groups 420 are composed of a plurality of transceivers 42. The same infrared signal is transmitted simultaneously from all of the transceivers 42 included in a single communication group 420 to an electronic shelf label 5. The number of transceivers 42 transmitting the infrared signal to a single electronic shelf label 5 thereby increases, and the electronic shelf label 5 can receive the infrared signal from the transceivers 42 regardless of the position of the electronic shelf label 5 in the arrangement. Although this effect would not be obtained, the communication groups 420 may also be composed each of a single transceiver 42. In other words, a configuration may be adopted in which N = M.

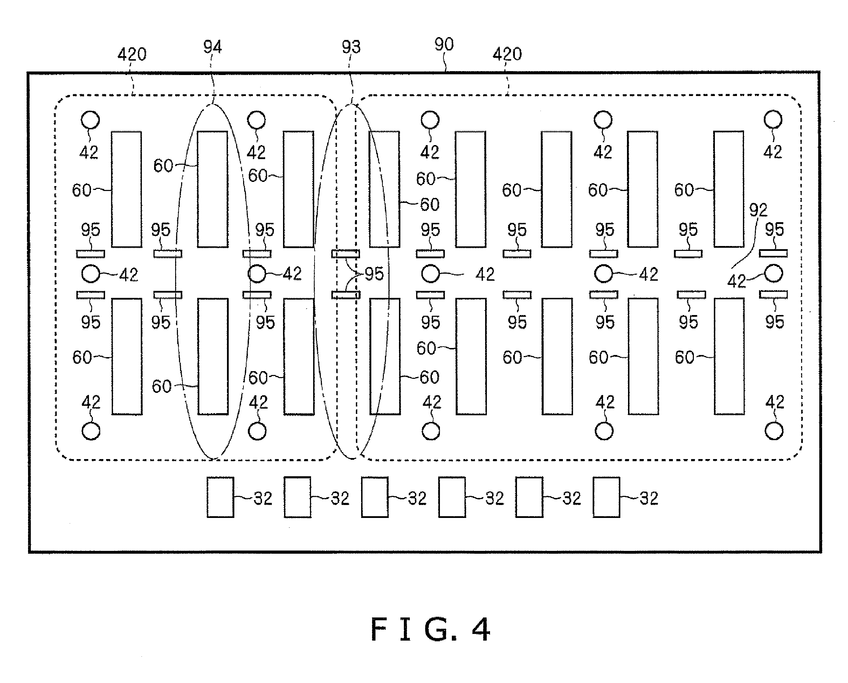

In a case in which only a single communication group 420 is activated for one transmission of an infrared signal to an electronic shelf label 5, when the communication groups 420 are defined so that there are no transceivers 42 included in an overlap between the M communication groups 420 as shown in FIG 4, the number of transceivers 42 simultaneously transmitting the infrared signal is less for an electronic shelf label 5 positioned at the bottom of a boundary portion 93 between the two adjacent communication groups 420 than for an electronic shelf label 5 positioned at the bottom of a central portion 94 of each communication group 420. The merit of simultaneously activating a plurality of transceivers 42 is therefore not adequately obtained.

Therefore, in the first embodiment, M communication groups 420 are defined so that the transceivers 42 included in two adjacent communication groups 420 partially overlap as shown in FIG 3. The merit of simultaneously activating a plurality of transceivers 42 can thereby be adequately obtained even when only a single communication group 420 is activated for a single transmission of an infrared signal to an electronic shelf label 5, as in the first embodiment.

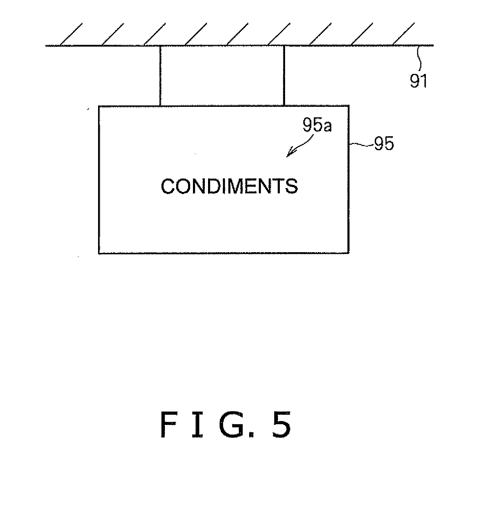

The sales floor for products 6 in the sales space 90 is divided into a plurality of departments. A guide sign 95 for providing guidance for the sales floor of the products 6 is provided for each sales floor department in the sales space 90. FIG 5 is a view showing a guide sign 95. As shown in FIG 5, the guide sign 95 is hung from the ceiling 91 of the sales space 90, for example, and department information, e.g., a department name 95a, indicating the corresponding sales floor department is shown on a label or printed on the guide sign 95. The department information shown on the guide sign 95 may be a graphic or the like depicting the products 6 sold in the sales floor department to which the guide sign 95 refers. A department number assigned to each sales floor department may also be shown together with the department name 95a on the guide sign 95. Such a guide sign 95 is provided near the entrance to the indicated sales floor department in a main aisle 92 in the sales space 90, for example.

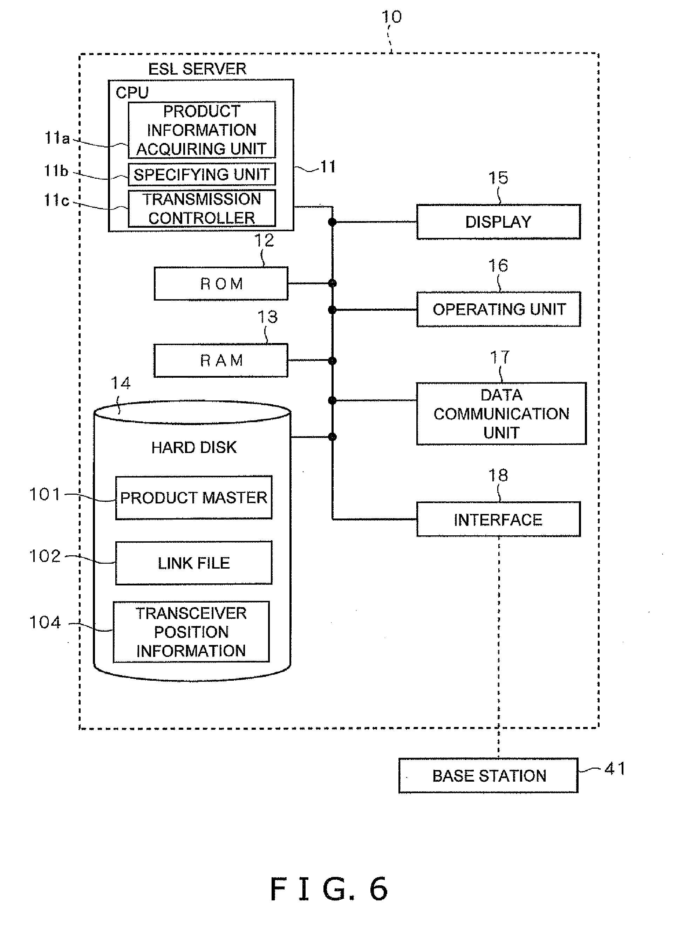

The ESL server 10 is a server device for managing the electronic shelf label system 1 as a whole, and is disposed in a back room separate from the sales space 90 in the store. FIG 6 is a view showing the configuration of the ESL server 10. The hardware configuration of the ESL server 10 is the same as that of a common computer. As shown in FIG 6, the ESL server 10 is provided with a CPU 11 for performing various types of computational processing, a ROM 12 for storing a basic program, a RAM 13 as a working area for computational processing, a hard disk 14 for storing programs and/or various types of data files and the like, a display 15 for providing various displays, an operating unit 16 composed of a keyboard and mouse or the like, and a data communication unit 17 capable of communicating data via a LAN 21. The ESL server 10 is furthermore connected to the base station 41 via an interface 18, and data to be transmitted to the electronic shelf labels 5 are delivered to the base station 41 via the interface 18.

A dedicated program is stored in advance in the hard disk 14 of the ESL server 10, and the CPU 11 performs computational processing in accordance with the program, whereby the various functions of the ESL server 10 are realized. A product master 101, a link file 102, and a translation master 103 are also stored in the hard disk 14 of the ESL server 10.

The product master 101 is a data file indicating various types of information relating to the products 6, and the information in the product master 101 is used primarily for display on the electronic shelf labels 5. The electronic shelf labels 5 of the first embodiment can display not only the price of a product 6, but also a product code, a product name, a sold quantity, an order quantity, a special sale period, and other product information, and these items of information are recorded in the product master 101. Specifically, the product master 101 is in a table format showing information in which a single record relates to a single product 6, and a product code, a product name, a normal price, a special price, a sale period, a sold quantity, an inventory quantity, an order quantity, and other information are registered for each record. These items of information are the same as items of information in the product master 301 stored in the POS system 3 described above, and are registered based on the information of the product master 301 by communication with the ESL server 10 and the POS system 3. The information of the product master 101 and the information of the product master 301 therefore have matching content.

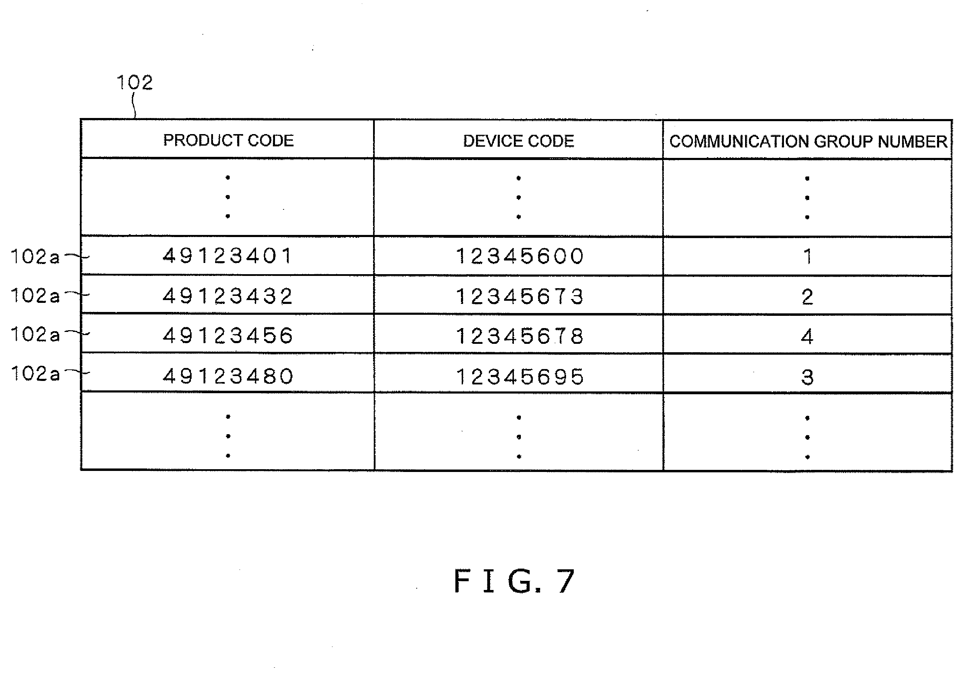

The link file 102 is a data file for correlating data between the electronic shelf labels 5 and the products 6. FIG 7 is a view showing an example of the link file 102. As shown in FIG 7, the link file 102 is in a table format, and is composed of link information in which each record 102a is correlated with a product code and a device code. The device code is information for identifying an electronic shelf label 5, and is a specific hardware ID (hard identification information) for each of the plurality of electronic shelf labels 5 provided to the electronic shelf label system 1. Through such a link file 102, each electronic shelf label 5 and product 6 are correlated by data. A device code in the link file 102 is utilized to transmit the price of a certain product 6 to the electronic shelf label 5 that corresponds to the product 6.

Each record 102a of the link file 102 has registered therein the number (communication group number) of the communication group 420 that is capable of communicating with the electronic shelf label 5 of the device code registered in the record 102a. Consequently, when data are transmitted to a certain electronic shelf label 5, the record 102a that corresponds to the electronic shelf label 5 is referenced, and the data are transmitted from the communication group 420 having the communication group number registered in the record 102a. The data can thereby be immediately transmitted to the electronic shelf label 5.

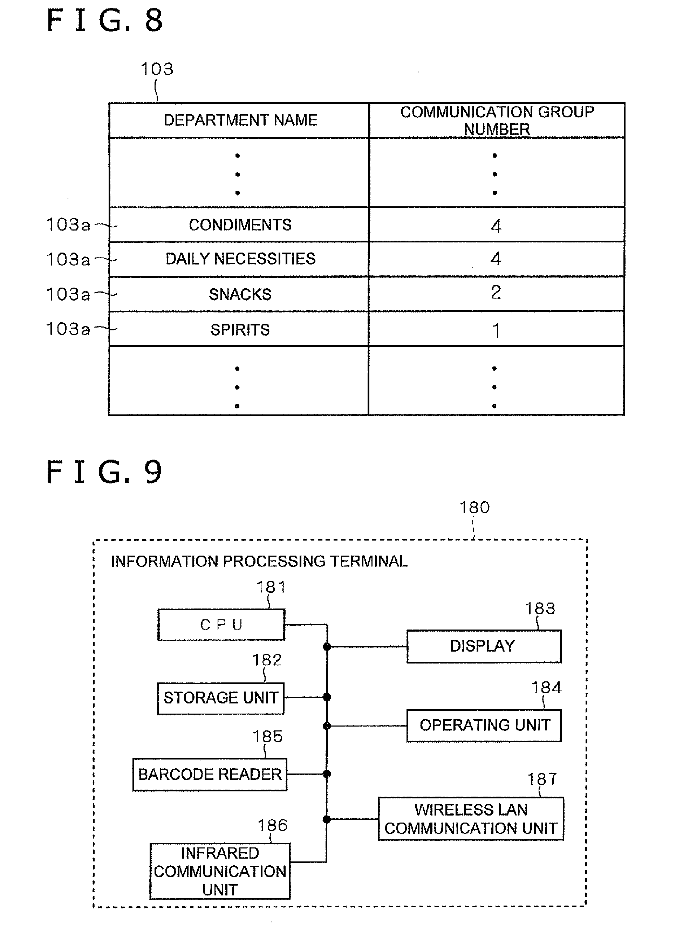

The translation master 103 is a data file used when product information is transmitted to an electronic shelf label 5 after a product 6 has been correlated with the electronic shelf label 5, and the translation master 103 indicates a correlation between the communication group numbers and the names of each department of the sales floor in the sales space 90. FIG 8 is a view showing an example of the translation master 103. As shown in FIG 8, the translation master 103 is in a table format, and one department name and the communication group number of the communication group 420 that includes the sales floor department indicated by the department name in the communication area thereof are registered for each record 103a. The "communication area" of a communication group 420 is the area of communication with all of the transceivers 42 constituting the communication group 420. Consequently, when a communication group 420 is composed of a single transceiver 42, the communication area of the communication group 420 is the same as the communication area of the transceiver 42 constituting the communication group 420. The method of using the translation master 103 will be described in detail hereinafter.

In the ESL server 10 configured as described above, the transmission data to be transmitted to an electronic shelf label 5 are generated by the CPU 11, and the transmission data are outputted to the transceivers 42 of any one communication group 420 of the M communication groups 420 via the interface 18 and the base station 41. A transceiver 42 that has received the transmission data from the ESL server 10 transmits an infrared signal including the transmission data, i.e., an infrared signal modulated by the transmission data, to an electronic shelf label 5 that belongs to the communication area of the transceiver 42. The same transmission data are thereby transmitted to electronic shelf labels 5 that belong to the communication area of a certain communication group 420. The transmission data transmitted from the ESL server 10 include the normal price and/or special price and other product information in the product master 101, and the device code and other information.

An access point (AP) 170 which is a radio relay device for wireless LAN is connected to the LAN 21, and the information processing terminal 180 can connect to the LAN 21 via the access point 170. Consequently, the information processing terminal 180 can communicate with the store controller 2, the POS server 31, and the ESL server 10 via the LAN 21.

FIG 9 is a view showing the configuration of the information processing terminal 180. As shown in FIG 9, the information processing terminal 180 is provided with a CPU 181 for performing various types of computational processing, a storage unit 182 composed of ROM and/or RAM or the like for storing various types of information, a display 183 for providing various types of displays, an operating unit 184 composed of a plurality of operating buttons, a barcode reader 185 for acquiring the information indicated by a barcode, an infrared communication unit 186 for communicating by infrared with the electronic shelf labels 5, and a wireless LAN communication unit 187 having data communication functionality by way of wireless communication using a wireless LAN.

The information processing terminal 180 is capable of communicating data with the store controller 2, the POS server 31, and the ESL server 10 via the AP 170 and the LAN 21 through the functionality of the wireless LAN communication unit 187. A store clerk can input various types of information to the information processing terminal 180 by utilizing the operating unit 184 and the barcode reader 185 which function as input units for receiving the inputting of information. A dedicated program is stored in advance in the storage unit 182 of the information processing terminal 180, and the CPU 181 performs computational processing in accordance with the program, whereby the various functions of the information processing terminal 180 are realized.

The information processing terminal 180 such as described above may be composed of a dedicated portable device such as a handy terminal, or may be composed of a notebook personal computer and/or PDA or other multipurpose portable computer to which a barcode reader is connected.

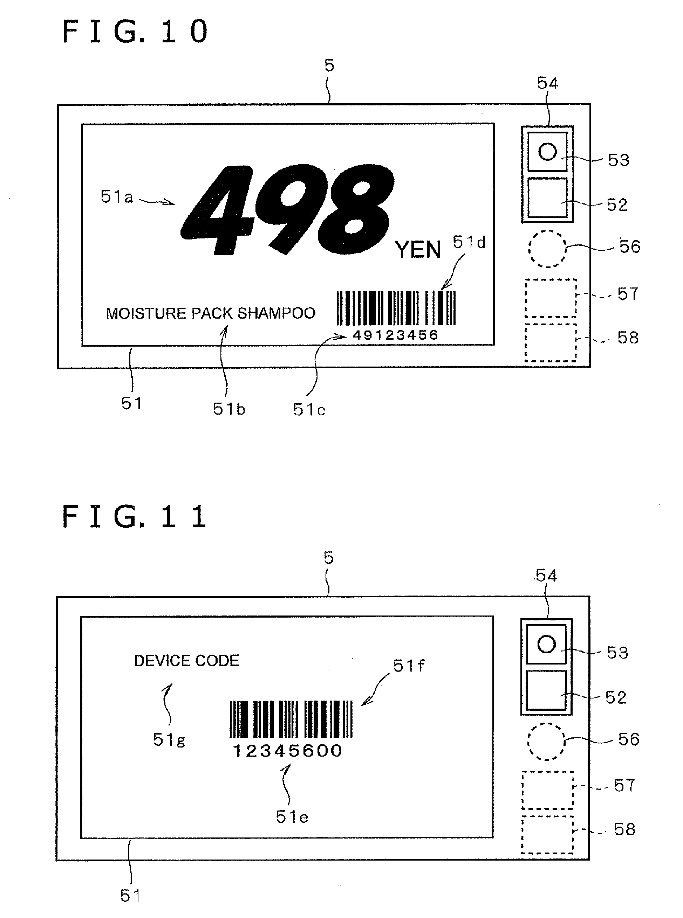

The configuration of an electronic shelf label 5 will next be described in detail. FIG 10 is a view showing the configuration of an electronic shelf label 5. As shown in FIG 10, a display 51 for displaying various types of information, and a communication unit 54 for handling communication with a transceiver 42 are provided on the front surface of the electronic shelf label 5.

The communication unit 54 is provided with a light-emitting part 52 for outputting an infrared signal, and a light-receiving part 53 for receiving an infrared signal from a transceiver 42, the remote control 160, or the information processing terminal 180, converting the infrared signal to an electrical signal, and outputting the electrical signal. The light-emitting part 52 for functioning as a transmitter for transmitting data is composed of an LED, for example, and the light-receiving part 53 for functioning as a receiver for receiving data is composed of a photodiode and amplifier, for example.

The display screen of the display 51 is a dot-matrix non-volatile display unit composed of a plurality of pixels arranged in a matrix, and is composed of electronic paper, for example. In an electronic paper or other non-volatile display unit, the display content can be maintained without applying drive power. Since the display 51 is a dot-matrix display unit, not only is it possible to display numerical values indicating the price or the like of a product 6, but characters, numbers, graphics, and other displays can be produced.

As shown in FIG 10, the price 51a of the product 6 to which the device (electronic shelf label 5) is correlated, and the product name 51b of the product 6 are displayed on the display 51. A character string 51c indicating the product code as a number, and a barcode 51 d indicating the product code are also displayed on the display 51 in the direction in which the barcode 51d extends.

A small-sized battery 56 for supplying power to the electronic shelf label 5, a controller 57 for controlling the general operation of the electronic shelf label 5, and a memory 58 are provided inside the electronic shelf label 5. The controller 57 is composed of a CPU and other components. The memory 58 stores the price and/or product name and other various information to be displayed on the display 51, or the device code of the device (electronic shelf label 5). An infrared signal outputted from a transceiver 42 is converted to an electrical signal in the communication unit 54 and then inputted to the controller 57. The controller 57 subjects the inputted electrical signal to demodulation processing and acquires transmission data from the ESL server, and temporarily stores the price and/or product name and other information included in the transmission data in the memory 58. The controller 57 then controls the display 51 so that the various types of information in the memory 58 are displayed on the display 51. The controller 57 thus functions as a display controller for controlling display by the display 51.

In the electronic shelf label 5, the display by the display 51 can be switched, and not only the price of a product 6, but also a sold quantity, an order quantity, a special sale period, and other product information can be displayed, as described above. By switching the display, the electronic shelf label 5 can also display the device code assigned thereto. The display on the display 51 switches according to the type of infrared signal outputted from the remote control 160 and/or the information processing terminal 180. The remote control 160 has a plurality of operating buttons not shown in the drawing and is capable of transmitting a plurality of types of infrared signals in response to external operation of the operating buttons. When an infrared signal transmitted from the remote control 160 is received by the light-receiving part 53 of an electronic shelf label 5, the controller 57 of the electronic shelf label 5 switches the display of the display 51 according to the type of the infrared signal received by the light-receiving part 53. The information processing terminal 180 is also capable of transmitting a plurality of types of infrared signals from the infrared communication unit 186, and when an infrared signal transmitted from the information processing terminal 180 is received by the light-receiving part 53 of an electronic shelf label 5, the display of the display 51 is switched according to the type of the infrared signal.

FIG 11 is a view showing the display of the electronic shelf label 5 when the display has switched to showing the device code of the device (electronic shelf label 5). As shown in FIG 11, a character string 51e indicating the device code as a number, and a barcode 51f indicating the device code are displayed on the display 51 in the direction in which the barcode 51f extends, and a "device code" character string 51g is displayed.

### <Method for displaying product information on an electronic shelf label>

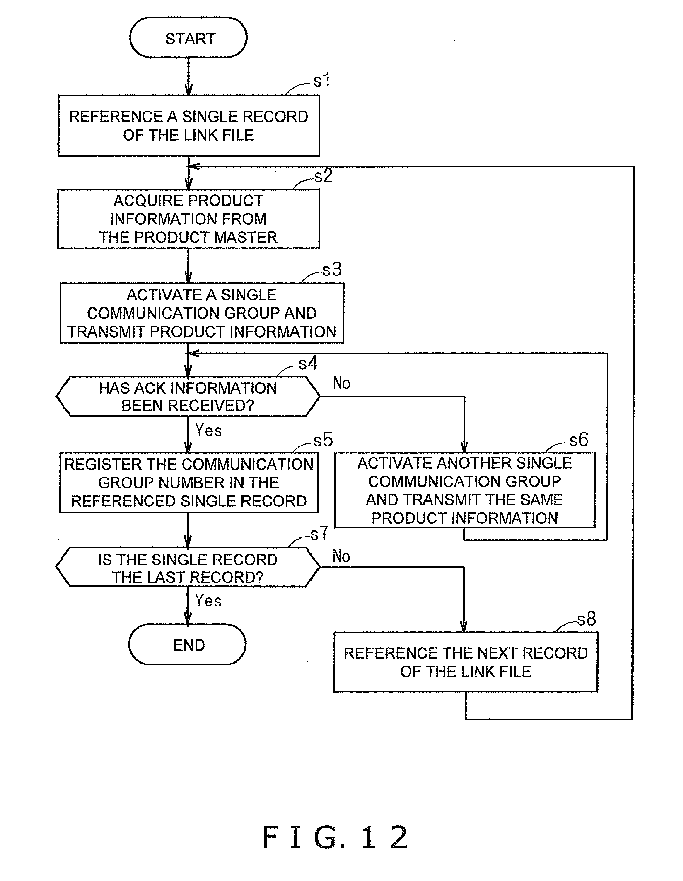

The operation of the electronic shelf label system 1 according to the first embodiment until the product information is displayed on an electronic shelf label 5 will next be described. FIG 12 is a flowchart showing the operation of the electronic shelf label system 1 according to the first embodiment when product information is first transmitted to the electronic shelf labels 5 in the sales space 90 at such times as during installation of the system.

As shown in FIG 12, in the first step s1, the CPU 11 of the ESL server 10 references a single record 102a (the top record 102a, for example) of the link file 102 and acquires the product code relating to a single product 6 and the device code correlated with the product code from the single record 102a.

In the next step s2, the CPU 11 references the product master 101 on the basis of the acquired product code and acquires the product information associated with the product code in the product master 101. The CPU 11 then generates transmission data which include the acquired product information and device code.

In the next step s3, the CPU 11 selects any one communication group 420 of the M communication groups 420. The CPU 11 performing computational processing in accordance with a dedicated program functions as a transmission controller 11c. Specifically, the CPU 11 functioning as a transmission controller 11c activates the selected communication group 420 via the interface 18 and the base station 41 and causes the transceivers 42 of the communication group 420 to transmit an infrared signal which includes the generated transmission data.

The infrared signal transmitted from the transceivers 42 is received in the communication unit 54 of an electronic shelf label 5 and converted to an electrical signal. The controller 57 demodulates the electrical signal obtained by the communication unit 54 and acquires the transmission data from the ESL server 10. The controller 57 determines whether the device code in the obtained transmission data matches the device code of the device of the controller 57 (the electronic shelf label 5) stored in advance in the memory 58. When the acquired device code does not match that of the device (electronic shelf label 5), the controller 57 determines that the received infrared signal is a signal intended for another electronic shelf label 5, and processing is ended. When the acquired device code matches that of the device (electronic shelf label 5), the controller 57 determines that the received infrared signal is a signal intended for the device (electronic shelf label 5), and stores the product information in the obtained transmission data in the memory 58. The controller 57 then causes the product information in the memory 58 to be displayed on the display 51. A screen such as the one shown in FIG 10 is thereby displayed by the electronic shelf label 5.

When the product information from the ESL server 10 is displayed on the display 51, the controller 57 causes an infrared signal which includes ACK information indicating that the transmission data from the ESL server 10 were received normally to be outputted by the light-emitting part 52. This infrared signal is converted to an electrical signal by the transceiver 42, and the ACK information included in the electrical signal is inputted to the CPU 11 via the base station 41 and the interface 18.

When step s3 is executed, the CPU 11 of the ESL server 10 in step s4 monitors whether the ACK information from the electronic shelf label 5 was received by any of the plurality of transceivers 42 of the selected communication group 420. When any of the transceivers 42 in the selected communication group 420 receives the ACK information from the electronic shelf label 5, and the received ACK information is received via the base station 41 and the interface 18, the CPU 11 of the ESL server 10 determines in step s5 that communication with the electronic shelf label 5 has occurred normally. The ACK information from the electronic shelf label 5 is thus monitored by a plurality of transceivers 42, thereby enabling the ACK information to be reliably received. The CPU 11 then registers the communication group number of the activated communication group 420 in the single record 102a referenced in step s1. The communication group number of the communication group 420 that is capable of communicating with the electronic shelf label 5 having the device code registered in the single record 102a is thereby registered in the single record 102a, as shown in FIG 7.

On the other hand, when the ACK information from the electronic shelf label 5 is not received within a predetermined period of time in step s4, the CPU 11 in step s6 selects a communication group 420 other than the selected communication group 420. The CPU 11 then activates the newly selected communication group 420 via the interface 18 and the base station 41 and causes an infrared signal which includes the transmission data generated in step s2 to be transmitted by the transceivers 42 of the communication group 420. Step s4 is then re-executed, and the CPU 11 of the ESL server 10 monitors reception of the ACK information from the electronic shelf label 5.

The ESL server 10 according to the first embodiment thus searches for the communication group 420 that is capable of communicating with an electronic shelf label 5, i.e., the communication group 420 that includes the position of the electronic shelf label 5 in the communication area thereof, by confirming whether the ACK information from the electronic shelf label 5 has been received.

When step s5 is executed, the CPU 11 determines in step s7 whether the referenced single record 102a of the link file 102 is the last record of the link file 102, and when the record is not the last record, the CPU 11 references the next single record 102a of the link file 102 and acquires the product code and device code registered in the record 102a. The processing subsequent to step s2 is then executed. All of the records 102a of the link file 102 are thereby referenced in sequence. When the referenced single record 102a of the link file 102 is the last record of the link file 102, the CPU 11 ends processing.

For all of the products 6 registered in the link file 102, product information is thus transmitted to and displayed on the electronic shelf label 5 that is correlated with a product 6.

In a case in which the product information for a certain product 6 in the product master 101 has been changed, the changed product information is transmitted from the ESL server 10 to the electronic shelf label 5 that is correlated with the product 6. At this time, since the communication group number of the communication group 420 that is capable of communicating with the electronic shelf label 5 is registered in the record 102a in which the device code of the electronic shelf label 5 is registered in the link file 102, there is no need for processing for searching the communication group 420 capable of communicating with the electronic shelf label 5. The changed product information can therefore be immediately transmitted to the electronic shelf label 5. The price and other product information displayed by the electronic shelf label 5 can thereby be replaced immediately after the product master 101 is updated.

### <Correlation of products with electronic shelf labels>

When the products 6 sold are changed, processing (correlation processing) is needed to correlate data between an electronic shelf label 5 and a new product 6 handled by the store. The information processing terminal 180 is used for this correlation processing.

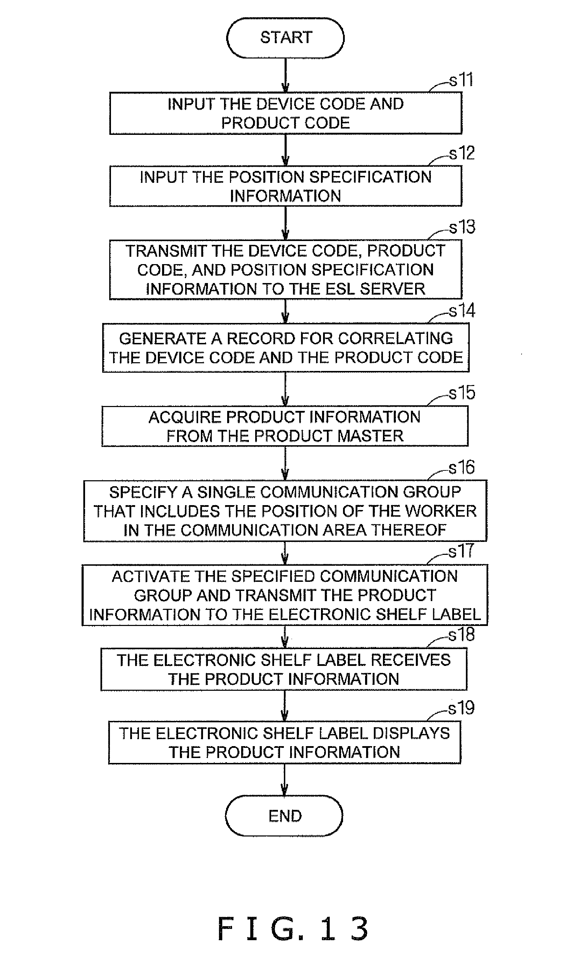

FIG 13 is a flowchart showing the operation of the electronic shelf label system 1 of the present embodiment during correlation processing. Before the correlation processing, the products 6 to be correlated are placed in the faces 61 of the product shelf 60 in the same state as when products are made available for sale as shown in FIG 2. Electronic shelf labels 5 not yet correlated with a product are prepared in a number equal to the number of types (number of faces 61) of products 6 to be correlated. The plurality of electronic shelf labels 5 prepared are placed on a cart for easy transport. The electronic shelf labels 5 when not yet correlated with products 6 are configured so as to display the respective device codes thereof in the form of a character string 51e and a barcode 51f as shown in FIG 11 described above.

While carrying the information processing terminal 180, a worker performing the correlation processing transports the cart on which the electronic shelf labels 5 are placed, and moves to the vicinity of the position (hereinafter referred to as the "product position") at which a single product 6 (hereinafter referred to as the "target product 6") to be correlated is placed in the sales space 90. The worker then performs the operations described below in the vicinity of the product position.

The worker first attaches a single electronic shelf label (hereinafter referred to as the "target electronic shelf label") to be correlated with the target product 6 at the product position. The worker then performs a predetermined input operation with respect to the operating unit 184 of the information processing terminal 180 carried by the worker, whereupon the operating unit 184 inputs the operation information to the CPU 181. The CPU 181 then sets a processing mode of the information processing terminal 180 to a "link mode" for correlation.

In the next step s11, when the worker uses the barcode reader 185 provided to the information processing terminal 180 to read the barcode 51f indicating the device code as displayed by the target electronic shelf label 5, the device code is acquired from the target electronic shelf label 5, and the device code is inputted from the barcode reader 185 to the CPU 181. Since the barcode 51f is displayed on the display 51 at the front of the target electronic shelf label 5, the device code is acquired while the target electronic shelf label 5 remains attached to the product shelf 60. When the worker then uses the barcode reader 185 of the information processing terminal 180 to read the barcode on the target product 6 placed on the product shelf 60, the product code is acquired from the target product 6, and the product code is inputted from the barcode reader 185 to the CPU 181.

The device code of the target electronic shelf label 5 and the product code of the target product 6 are thus acquired by the barcode reader 185 of the information processing terminal 180, and the electronic shelf label 5 and product 6 correlated with each other are thereby designated by the electronic shelf label system 1 of the present embodiment.

The order in which the device code and the product code are acquired is not particularly limited, and the device code may be acquired after the product code is first acquired. In other words, the target product 6 may be designated first, or the target electronic shelf label 5 may be designated first in the information processing terminal 180.

In the next step s12, the worker operates the operating unit 184 of the information processing terminal 180 to input position specification information for specifying the worker's position to the information processing terminal 180. Since a guide sign 95 for providing guidance for the sales floor of the products 6 is provided for each sales floor department in the sales space 90 as described above, the position of the worker can be specified by the sales floor department name indicated by a guide sign 95. The operating unit 184 of the information processing terminal 180 in the first embodiment is capable of receiving the inputting of the department name indicated by a guide sign 95 as the position specification information for specifying the position of the worker who is carrying the information processing terminal 180. The worker operates the operating unit 184 to input "condiments," and/or "daily necessities," or another department name indicated by the closest guide sign 95 to the information processing terminal 180. The department name as the position specification information inputted to the information processing terminal 180 is inputted to the CPU 181.

The display 183 of the information processing terminal 180 may be composed of a touch panel display, and the display 183 may be used to input a sales floor department name to the information processing terminal 180. In this case, a list of sales floor department names is displayed on the display 183, and the worker touches a department name included on the list, for example, whereby the selected department name is inputted to the CPU 181. The worker is thereby able to input position specification information to the information processing terminal 180 by a one-touch operation.

The device code, product code, and department name inputted to the CPU 181 are transmitted in step s13 from the wireless LAN communication unit 187 to the ESL server 10 via the AP 170, and received by the data communication unit 17 of the ESL server 10. The device code, product code, and department name received by the data communication unit 17 are inputted to the CPU 11.

In the ESL server 10, the CPU 11 in step s14 generates a single record 102a of the link file 102 so as to correlate the inputted device code and product code. The target electronic shelf label 5 and the target product 6 are thereby correlated by data. At this stage, a communication group number is not registered in the generated record 102a.

In the next step s15, the CPU 11 performing computational processing in accordance with a dedicated program functions as a product information acquiring unit 11 a. Specifically, the CPU 11 functioning as a product information acquiring unit 11 a searches the product master 101 using the inputted product code as a search key and acquires the product information of the target product 6 from the product master 101. In step s16, the CPU 11 functions as a specifying unit 11b. Specifically, the CPU 11 specifies a single communication group 420 that includes the position of the worker carrying the information processing terminal 180 in the communication area thereof as an activation target group among the M communication groups 420, on the basis of the inputted position specification information, i.e., the department name. The translation master 103 described above is used at this time. The CPU 11 references the translation master 103 to acquire the communication group number corresponding to the inputted department name. The CPU 11 then designates the communication group 420 indicated by the acquired communication group number as the activation target group.

As described above, a single sales floor department name and the communication group number of the communication group 420 that includes the sales floor department indicated by the department name in the communication area thereof are registered in each record 103a of the translation master 103. The worker inputs the department name indicated by the closest guide sign to the information processing terminal 180, and the department name is inputted to the CPU 11. The department name inputted to the CPU 11 can therefore be considered to represent the sales floor department in which the worker is located. Consequently, the worker can also be considered to be present in the communication area of the communication group 420 that is indicated by the communication group number in the translation master 103 corresponding to the department name inputted to the CPU 11. The CPU 11 can thus designate the communication group 420 of the communication group number that corresponds to the inputted department name, the communication group number having been acquired by referencing the translation master 103, as the communication group 420 that includes the position of the worker in the communication area thereof.

In the next step s17, the CPU 11 functions as a transmission controller 11c. Specifically, the CPU 11 activates the specified activation target group via the interface 18 and the base station 41, and causes an infrared signal which includes the inputted device code and the acquired product information to be transmitted by the transceivers 42 of the activation target group. The infrared signal transmitted from the transceivers 42 is received in step s18 by an electronic shelf label 5 which belongs to the communication area of the transceivers 42.

When the device code included in the received infrared signal matches the device code stored by the memory 58, the controller 57 of the target electronic shelf label 5 in step s19 causes the display 51 to display the product information included in the infrared signal. The product information of the correlated target product 6 is thereby displayed on the target electronic shelf label 5, as shown in FIG 10.

As described above, since a worker is operating the information processing terminal 180 in the vicinity of the target electronic shelf label 5, the communication group 420 that includes the position of the worker in the communication area thereof is able to communicate with the target electronic shelf label 5. Consequently, the communication group 420 that includes the position of the worker in the communication area thereof is designated as the activation target group, and the product information for the target product 6 is transmitted from the activation target group as described above. The target electronic shelf label 5 can thereby receive the product information.

When the target electronic shelf label 5 displays the product information, the target electronic shelf label 5 then transmits an infrared signal which includes ACK information, and the ACK information is inputted to the ESL server 10. In the ESL server 10 to which the ACK information is inputted, the CPU 11 determines that the activation target group is capable of communicating with the target electronic shelf label 5, and registers the communication group number of the activation target group in the single record 102a generated in step s14.

As described above, in the electronic shelf label system 1 according to the first embodiment, the communication group 420 that includes the position of a worker in the communication area thereof is specified as the activation target group on the basis of position specification information for specifying the position of the worker who is utilizing the portable information processing terminal 180. The transceivers 42 belonging to the activation target group then transmit the product information in the product master 101 for the target product 6 designated by the information processing terminal 180. Consequently, when the worker designates the target electronic shelf label 5 by the information processing terminal 180 in the vicinity of the target electronic shelf label 5 as in the first embodiment, the communication group 420 that can communicate with the target electronic shelf label 5 can be promptly specified, and product information can be promptly transmitted to the target electronic shelf label 5. As a result, it is possible to reduce the amount of time between correlation of the target electronic shelf label 5 with the target product 6 and displaying of the product information on the target electronic shelf label 5. The worker can therefore do other work immediately after the target product 6 and the target electronic shelf label 5 have been correlated, and work efficiency is enhanced.

Furthermore, since product information can be prevented from being transmitted from communication groups 420 other than the communication group 420 that is capable of communicating with the target electronic shelf label 5, electronic shelf labels 5 that are capable of communicating with other communication groups 420 can be prevented from receiving unnecessary information, and unnecessary power consumption by other electronic shelf labels 5 can be reduced.

In the first embodiment, since the operating unit 184 of the information processing terminal 180 receives the inputting of the department information for indicating the sales floor department as inputting of position specification information for specifying the position of the worker, the worker who is utilizing the information processing terminal 180 can input to the operating unit 184 the department information indicated by a guide sign 95 located near the worker. The worker can therefore easily input position specification information to the operating unit 184, and work efficiency is enhanced.

### <First Modification>

Position specification information is inputted to the information processing terminal 180 in the example described above, but an input device which functions as an input unit for receiving the inputting of position specification information may be provided separately from the information processing terminal 180. For example, an input device attached to each product shelf 60 may receive the inputting of position specification information from a worker. A portable input device for inputting position specification information may also be provided separately from the information processing terminal 180. In this case, position specification information may be directly transmitted to the ESL server 10 from the input device, or position specification information may be inputted from the input device to the ESL server 10 via the information processing terminal 180. In a case in which an input unit for receiving the inputting of position specification information is provided to an information processing terminal 180 used to correlate products 6 with electronic shelf labels 5 as described above, the operation performed by the worker to input the position specification information can be simplified.

### <Second Modification>

A department name indicating a department of the sales floor is used as the position specification information for specifying the position of a worker in the example described above, but a department number assigned to each sales floor department may also be used. In this case, a correlation between the department number and the communication group number of the communication group 420 that includes the sales floor department indicated by the department number in the communication area thereof is registered in the translation master 103. A worker operates the operating unit 184 of the information processing terminal 180 to input the department number indicated by the closest guide sign 95 to the information processing terminal 180. A configuration may be adopted in which a list of the sales floor department numbers is displayed on the display 183 composed of a touch panel display, and the worker touches a department number included on the list, whereby the selected department number is inputted to the CPU 181.

### <Third Modification>

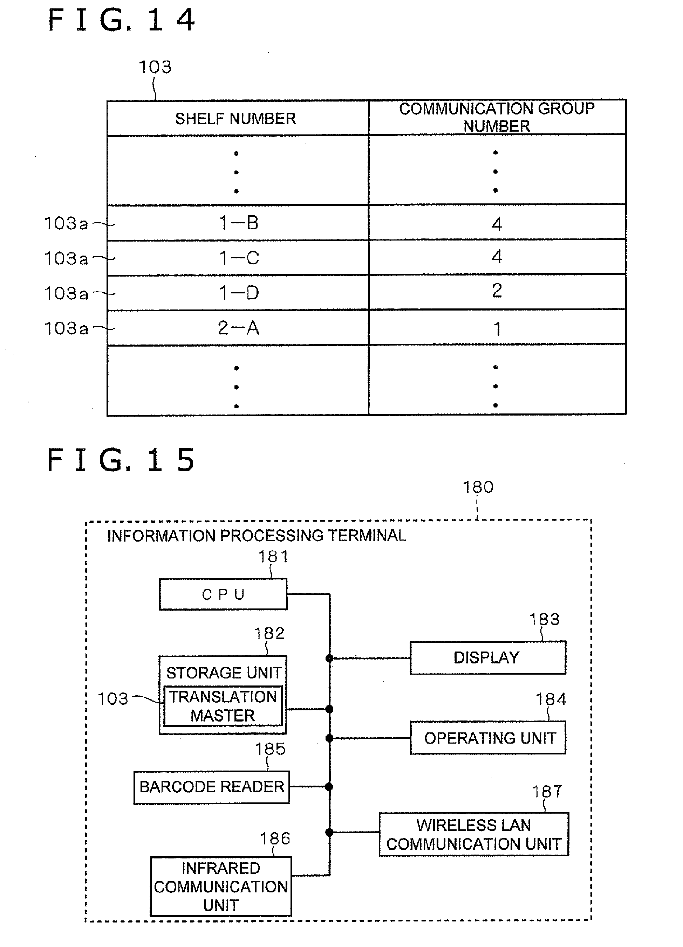

Since the position of a worker carrying the information processing terminal 180 can be specified by using a shelf number 60a indicated on a product shelf 60 placed in the sales space 90, the shelf number 60a may be used as the position specification information. An example of the translation master 103 used in this case is shown in FIG 14. As shown in FIG 14, one shelf number 60a and the communication group number of the communication group 420 that includes the position of the product shelf 60 indicated by the shelf number 60a in the communication area thereof are registered in each record 103a in the translation master 103.

To correlate a target product 6 and a target electronic shelf label 5, a worker in step s12 described above operates the operating unit 184 and inputs to the information processing terminal 180 the shelf number 60a of a nearby product shelf 60, e.g., the shelf number 60a of the product shelf 60 on which the target product 6 is placed. Then, in step s16, the CPU 11 references the translation master 103 shown in FIG 14 and acquires the inputted position specification information, i.e., the communication group number corresponding to the shelf number 60a, and designates the communication group 420 of the communication group number as the activation target group.

Position specification information can thus be easily inputted to the operating unit 184 by inputting the shelf number 60a of a product shelf 60 positioned near the worker to the operating unit 184, which receives the inputting of the shelf number 60a as inputting of position specification information. Work efficiency is thereby enhanced.

Since the shelf numbers 60a of product shelves 60 are often unique to each store, a translation master 103 is difficult to use in common between multiple stores. However, since the sales floor department names set for each store often have similarities, by creating a translation master 103 that includes all of the sales floor department names set for each store, and blacking out the communication group numbers that correspond to department names not set in each particular store, a translation master 103 can be used in common by multiple stores.

A configuration may also be adopted in which a list of shelf numbers 60a is displayed on a display 183 composed of a touch panel display, and a worker touches a shelf number 60a included in the list to input the shelf number 60a to the CPU 181.

### <Fourth Modification>

As described above, the device code of the electronic shelf label 5 correlated with a product 6, and the communication group number of the communication group 420 that is capable of communicating with the electronic shelf label 5 are correlated in the link file 102. On the other hand, a worker in the sales space 90 can be considered to be present in the communication area of the communication group 420 that is capable of communicating with the nearest electronic shelf label 5. By referencing the link file 102, the communication group 420 that is capable of communicating with an electronic shelf label 5 can be specified from the device code of the electronic shelf label 5, and the position of the worker can therefore be specified by the device code of the electronic shelf label 5 nearest the worker. Since the device code of the electronic shelf label 5 and the product code of the product 6 correlated with the electronic shelf label 5 are correlated in the link file 102, the device code of the electronic shelf label 5 correlated with the product 6 can be acquired from the product code of the product 6. Consequently, the position of the worker can be specified from the product code displayed on the electronic shelf label 5 nearest the worker, as well as from the product code indicated by the product 6 nearest the worker.

Therefore, the device code or product code displayed by the electronic shelf label 5 correlated with a product 6, or the product code indicated by the product 6 is inputted as position specification information to the information processing terminal 180, instead of department information or a shelf number 60a. In this case, the worker in step s12 described above inputs the product code or device code displayed by the nearest electronic shelf label 5 correlated with a product 6 to the information processing terminal 180 carried by the worker. Alternatively, the worker in step s12 inputs the product code indicated on the nearest product 6 to the information processing terminal 180 in the same manner as in step s11. Since a barcode 51d indicating the product code is displayed in the electronic shelf label 5 correlated with a product 6, as shown in FIG 10, the product code can be inputted to the information processing terminal 180 by using the barcode reader 185 to read the barcode 51d. An infrared signal is transmitted from the information processing terminal 180 to the electronic shelf label 5, and the electronic shelf label 5 thereby displays the display screen shown in FIG 11. The barcode 51f indicating the device code can therefore be displayed on the electronic shelf label 5. The device code of the electronic shelf label 5 can thereby be inputted to the information processing terminal 180 by using the barcode reader 185 to read the barcode 51f displayed by the nearest electronic shelf label 5. The barcode reader 185 thus functions as an input unit for receiving the inputting of a product code and/or device code.

Then, in step s16, the CPU 11 references the link file 102, acquires the device code as the inputted position specification information or the communication group number that corresponds to the product code, and designates the communication group 420 of the acquired communication group number as the activation target group. The product information is thereby transmitted from the communication group 420 that includes the position of the electronic shelf label 5 nearest the worker in the communication area thereof, and the product information is displayed by the target electronic shelf label 5.

As is apparent from the above description, the translation master 103 is unnecessary in a case in which the device code and/or product code displayed by the electronic shelf label 5 correlated with a product 6, or the product code indicated on the product 6, is inputted as position specification information to the information processing terminal 180.

### <Fifth Modification>

The translation master 103 is stored in the ESL server 10 in the example described above, but the translation master 103 may be stored in the information processing terminal 180. FIG 15 is a view showing an example of the configuration of the information processing terminal 180 in this case. As shown in FIG 15, the translation master 103 is stored in the storage unit 182 of the information processing terminal 180.

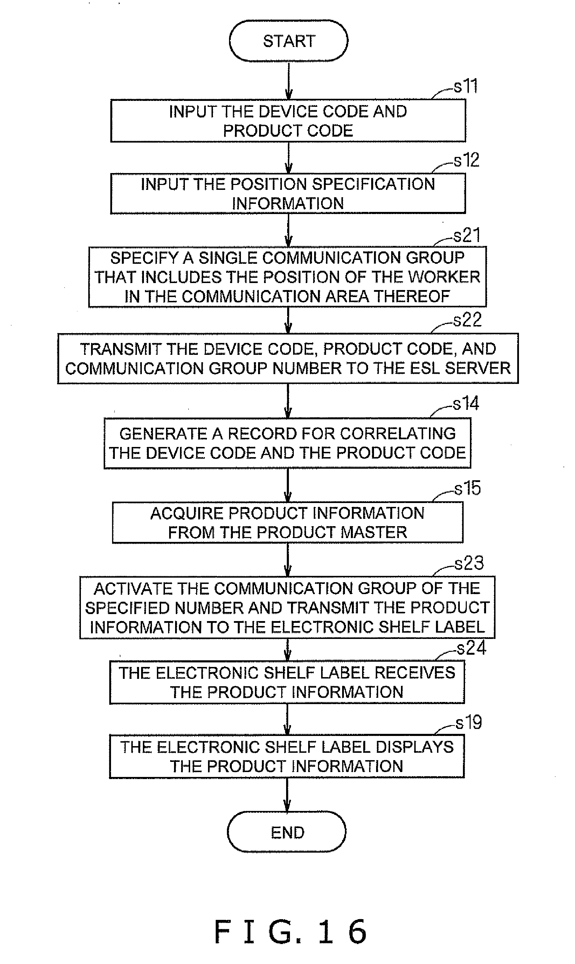

FIG 16 is a flowchart showing the operation of the electronic shelf label system 1 according to the first embodiment when the information processing terminal 180 shown in FIG 15 is used to correlate a product 6 and an electronic shelf label 5. As shown in FIG 16, step s1 described above is first executed, and the device code of the target electronic shelf label 5 and the product code of the target product 6 are inputted to the CPU 181 of the information processing terminal 180.

Step s12 described above is then executed, and the department name on a guide sign 95 in the vicinity of the worker carrying the information processing terminal 180 is inputted as position specification information to the CPU 181.

In the next step s21, the CPU 11 references the translation master 103, acquires the communication group number that corresponds to the inputted department name, and designates the communication group 420 indicated by the communication group number as the activation target group. In step s22, the device code and product code inputted to the CPU 181, and the communication group number of the activation target group acquired by the CPU 181 are transmitted from the wireless LAN communication unit 187 to the ESL server 10 via the AP 170 and received by the data communication unit 17 of the ESL server 10. The device code, product code, and communication group number received by the data communication unit 17 are inputted to the CPU 11.

In the ESL server 10, step s14 described above is executed, and a single record 102a is generated in the link file 102 for correlating the device code and product code inputted to the CPU 11. Step s15 described above is then executed, and the CPU 11 acquires the product information of the target product 6 from the product master 101.

In the next step s23, the CPU 11 activates the communication group 420 of the inputted communication group number, i.e., the activation target group, via the interface 18 and the base station 41, and causes an infrared signal which includes the inputted device code and the acquired product information to be transmitted by each of the transceivers 42 of the activation target group. The infrared signal transmitted from the transceivers 42 is received in step s24 by an electronic shelf label 5 belonging to the communication area of the transceivers 42.

Step s19 described above is then executed, and the product information of the correlated target product 6 is displayed on the target electronic shelf label 5 in the manner shown in FIG 10. After displaying the product information, the target electronic shelf label 5 transmits ACK information, and the ACK information is inputted to the ESL server 10. In the ESL server 10 to which the ACK information is inputted, the CPU 11 determines that the activation target group is capable of communicating with the target electronic shelf label 5, and the CPU 11 registers the communication group number of the activation target group in the single record 102a generated in step s14.

The same effects as when the translation master 103 is stored in the ESL server 10 are thereby obtained even when the translation master 103 is stored in the information processing terminal 180.

A plurality of information processing terminals 180 are often used, and when a change occurs in the translation master 103 in a case in which the translation master 103 is stored in the information processing terminals 180, the translation master 103 must be modified in all of the plurality of information processing terminals 180. Changing the translation master 103 in this case is therefore labor-intensive, and errors are prone to occur in modifying the translation master 103. However, in a case in which the translation master 103 is stored in the ESL server 10, since the translation master 103 can be centrally managed, the translation master 103 can easily be changed, and errors in changes to the translation master 103 can be prevented.

### <Sixth Modification>

In a case in which the display 183 of the information processing terminal 180 is composed of a touch panel display, the layout of the sales space 90 is displayed on the display 183, and a worker can input the position specification information for specifying the worker's position to the information processing terminal 180 by touching the portion of the screen of the display 183 that corresponds to the worker's location.

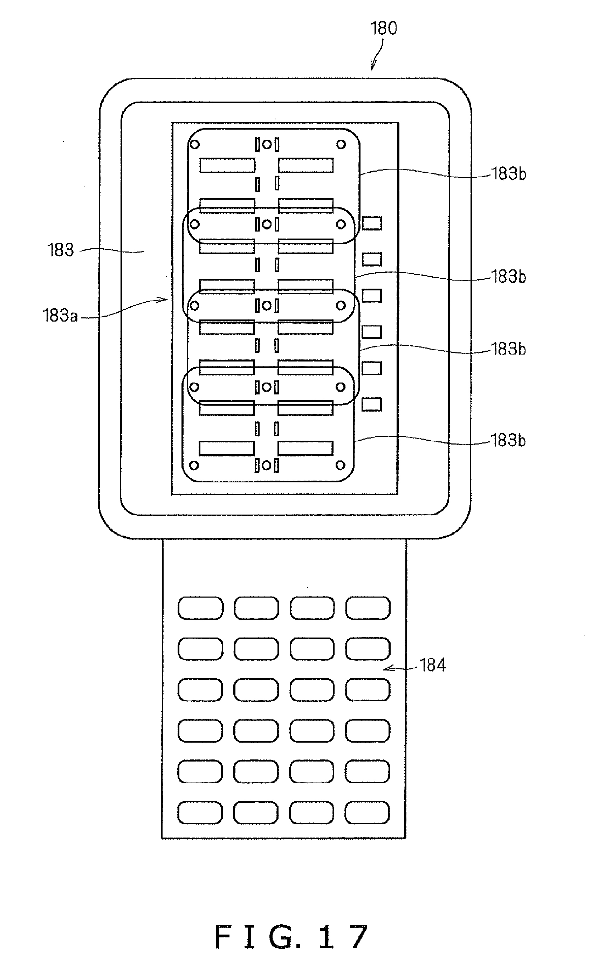

FIG 17 is a view showing the manner in which the layout 183a of the sales space 90 is displayed on the touch panel display 183. As shown in FIG 17, the layout 183a of the sales space 90 is displayed on the display 183, and solid lines 183b indicating the communication area of each communication group 420 in the sales space 90 are also displayed overlapping the layout 183a. The plurality of solid lines 183b displayed on the display 183 are displayed in different colors for each communication group 420. For example, the communication area of the communication group 420 that includes the side dish sales floor in the communication area thereof is displayed as a yellow solid line 183b, the communication area of the communication group 420 that includes the meats sales floor in the communication area thereof is displayed as a red solid line 183b, and the communication area of the communication group 420 that includes the fish sales floor in the communication area thereof is displayed as a blue solid line 183b. The communication area of the communication group 420 that includes the produce sales floor in the communication area thereof is displayed as a green solid line 183b, the communication area of the communication group 420 that includes the dried goods sales floor in the communication area thereof is displayed as a violet solid line 183b, and the communication area of the communication group 420 that includes the frozen foods sales floor in the communication area thereof is displayed as an aqua solid line 183b.

As shown in FIG 17, when a worker touches the portion corresponding to the worker's position in the screen of the display 183 on which the layout 183a of the sales space 90 is displayed, the operation information is inputted as position specification information to the CPU 181. The CPU 181 specifies the position of the worker on the layout 183a from the inputted operation information. The range encompassed by the communication area of each communication group 420 on the layout 183a of the sales space 90 is stored in the storage unit 182 of the information processing terminal 180, and the CPU 181 determines the activation target group on the basis of the information in the storage unit 182 and the specified position of the worker. The activation target group determined herein is the communication group 420 of the communication area touched by the worker among the communication areas (solid lines 183b) of the communication groups 420 displayed on the display 183. The CPU 181 transmits the communication group number of the activation target group, as well as the product code and device code inputted from the barcode reader 185, to the ESL server 10 via the wireless LAN communication unit 187. The processing subsequent to step s14 in FIG 16 is then executed, and the product information is displayed by the target electronic shelf label 5.

In a case in which the display 183 is a touch panel display, a worker can easily input the position specification information to the information processing terminal 180 by touching a portion of the screen of the display 183 on which the layout 183a of the sales space 90 is displayed. Work efficiency is therefore enhanced.

When the worker touches a portion in which the communication areas of two communication groups 420 overlap in the layout 183a on the display 183, those two communication groups are designated as activation target groups, and product information is transmitted from those two communication groups.

In a case in which the ESL server 10 does not receive ACK information from the target electronic shelf label 5 even when product information is transmitted from the communication group 420 specified as the activation target group, another communication group 420 adjacent to the original communication group 420 is designated as a new activation target group, and the product information is transmitted from the other communication group 420. A communication group 420 that is capable of communicating with the target electronic shelf label 5 can thereby be automatically and reliably detected.

### <Seventh Modification>

In contrast with the example described above, a configuration may be adopted in which position specification information (hereinafter referred to as "shelf label position specification information") for specifying the position of the electronic shelf label is displayed on an electronic shelf label 5 correlated with a product 6, and a worker inputs the shelf label position specification information displayed by the nearest electronic shelf label 5 as position specification information for specifying the shelf label's position to the information processing terminal 180. Department information (department name and/or department number) indicating the sales floor department in which the displaying electronic shelf label 5 is placed may be used as the shelf label position specification information. The shelf number 60a of the product shelf 60 which carries the product 6 to which the displaying electronic shelf label 5 is correlated, or in other words, the shelf number 60a of the product shelf 60 which carries the product 6 placed in the vicinity of the electronic shelf label 5, may also be used as the shelf label position specification information. Since the electronic shelf label 5 is positioned in the communication area of the communication group 420 that is capable of communicating with the electronic shelf label 5, the position of the electronic shelf label 5 can also be specified by the communication group number of the communication group 420. The communication group number (hereinafter referred to as the "communication-capable group information") indicating the communication group 420 that is capable of communicating with the electronic shelf label 5 can therefore be used as the shelf label position specification information.

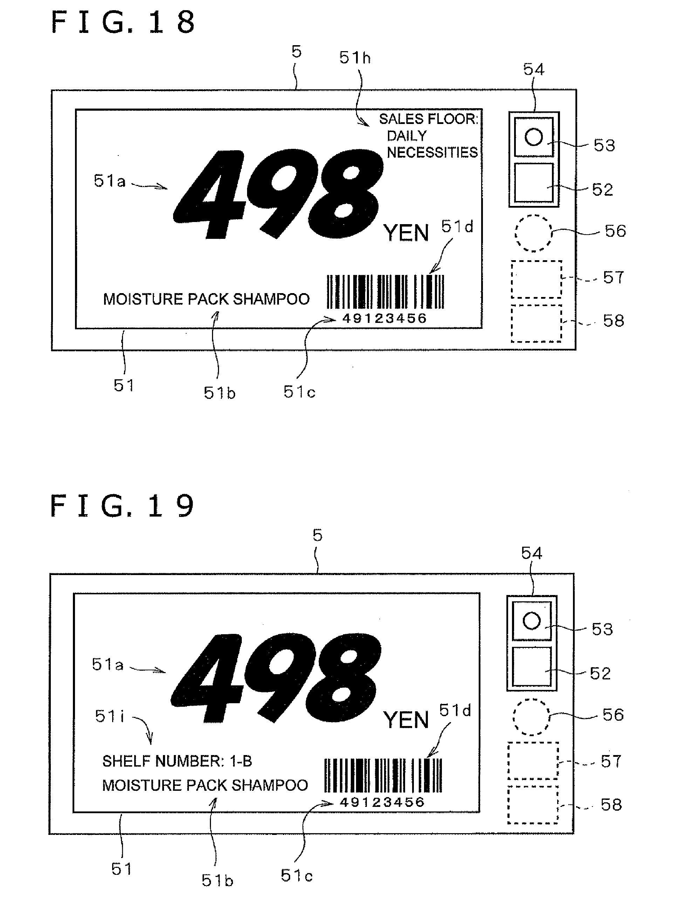

FIG 18 is a view showing an example in which the electronic shelf label 5 correlated with a product 6 displays a department name 51h as the shelf label position specification information. A display such as the one shown in FIG 18 is made possible by registering a department name as product information for each record of the product master 101 in the ESL server 10 in advance, wherein the department name indicates the sales floor department in which the product 6 that corresponds to the record is placed, and transmitting the department name along with the price and/or product name and other product information to the electronic shelf label 5 as the department name indicating the sales floor department in which the electronic shelf label 5 is placed. When the electronic shelf label 5 produces a display such as the one shown in FIG 18, the worker in step s12 described above operates the operating unit 184 of the information processing terminal 180 and inputs the department name 51h displayed by the nearest electronic shelf label 5 as position specification information to the information processing terminal 180. In step s16 and/or step s21 described above, the translation master 103 shown in FIG 8 is referenced, the communication group number corresponding to the department name is acquired as position specification information, and the communication group 420 indicated by the communication group number is designated as the activation target group.

FIG 19 is a view showing an example in which the electronic shelf label 5 correlated with a product 6 displays a shelf number 51i as the shelf label position specification information. A display such as the one shown in FIG 19 is made possible by registering a shelf number as product information for each record of the product master 101 in the ESL server 10 in advance, wherein the shelf number indicates the product shelf 60 in which the product 6 that corresponds to the record is placed, and transmitting the shelf number along with the price and/or product name and other product information to the electronic shelf label 5. When the electronic shelf label 5 produces a display such as the one shown in FIG 19, the worker in step s12 described above operates the operating unit 184 of the information processing terminal 180 and inputs the shelf number 51i displayed by the nearest electronic shelf label 5 as position specification information to the information processing terminal 180. In step s16 and/or step s21 described above, the translation master 103 shown in FIG 14 is referenced, the communication group number corresponding to the shelf number is acquired as position specification information, and the communication group 420 indicated by the communication group number is designated as the activation target group.

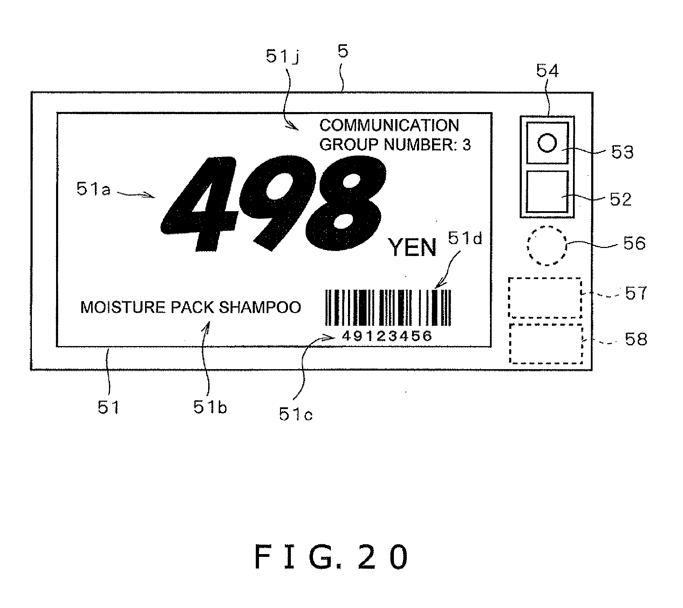

FIG 20 is a view showing an example in which the electronic shelf label 5 correlated with a product 6 displays communication-capable group information 51j as the shelf label position specification information. A display such as the one shown in FIG 20 is made possible by transmitting the communication group number that corresponds to the device code of the electronic shelf label 5 in the link file 102 to the electronic shelf label 5. When the electronic shelf label 5 produces a display such as the one shown in FIG 20, the worker in step s12 described above operates the operating unit 184 of the information processing terminal 180 and inputs the communication-capable group information 51j displayed by the nearest electronic shelf label 5 as position specification information to the information processing terminal 180. The communication group 420 indicated by the communication-capable group information 51j is then designated as the activation target group.

The operating unit 184 of the information processing terminal 180 thus receives the inputting of the shelf label position specification information displayed by the electronic shelf label 5 correlated with a product 6 as inputting of the position specification information, and a worker who is utilizing the information processing terminal 180 can thereby input the shelf label position specification information displayed on an electronic shelf label 5 in the vicinity of the worker to the information processing terminal 180. The worker can thereby easily input the position specification information to the information processing terminal 180, and work efficiency is enhanced.

The shelf label position specification information may be displayed on the screen normally displayed by the electronic shelf label 5, i.e., the screen on which the price 51a and/or product name 51b and other information used by the customer is primarily displayed, as shown in FIGS. 18 through 20, or the shelf label position specification information may be displayed on a separate screen. In the latter case, the display screen of the electronic shelf label 5 is switched from the screen shown in FIG 10 to a screen displaying the shelf label position specification information by transmitting a predetermined infrared signal from the remote control 160 and/or the information processing terminal 180.

### <Eighth Modification>

The shelf label position specification information displayed by the electronic shelf label 5 in the examples shown in FIGS. 18 through 20 is inputted to the information processing terminal 180 by a worker operating the operating unit 184, but the electronic shelf label 5 may also transmit the shelf label position specification information for reception by the information processing terminal 180. In this case, when a worker performs a predetermined operation of the operating unit 184 of the information processing terminal 180, the infrared communication unit 186 outputs an infrared signal that includes a command to transmit shelf label position specification information. In the electronic shelf label 5, when the infrared signal including the command to transmit shelf label position specification information is received by the communication unit 54, an infrared signal that includes the shelf label position specification information is transmitted from the communication unit 54. This infrared signal is received by the infrared communication unit 186 of the information processing terminal 180, and the shelf label position specification information included therein is inputted to the CPU 181. The infrared communication unit 186 can thus function as an input unit for receiving the inputting of the shelf label position specification information as inputting of position specification information.

### <Second Embodiment>

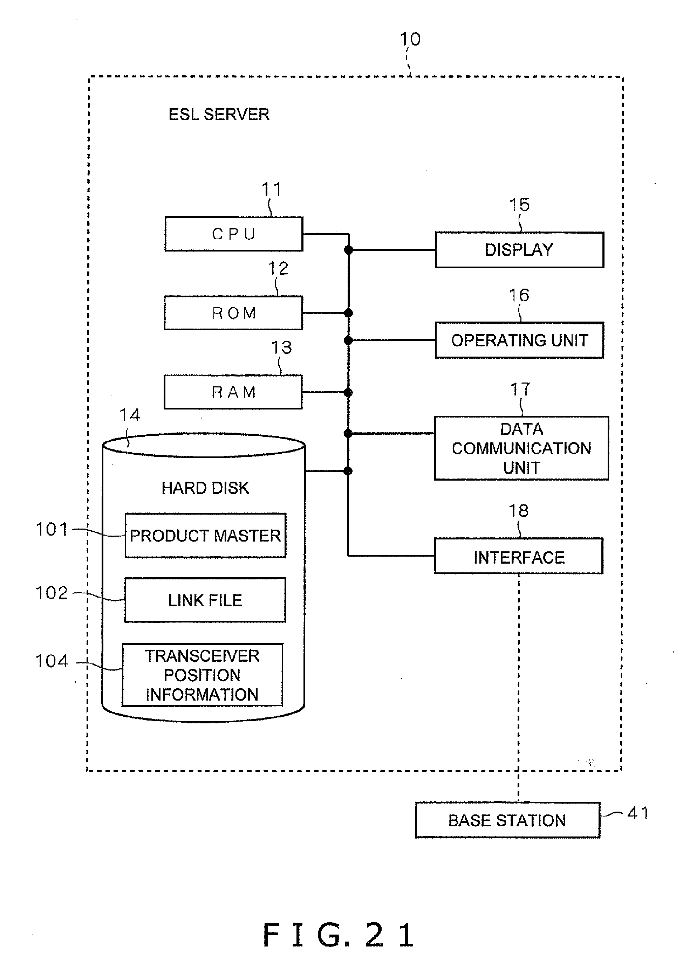

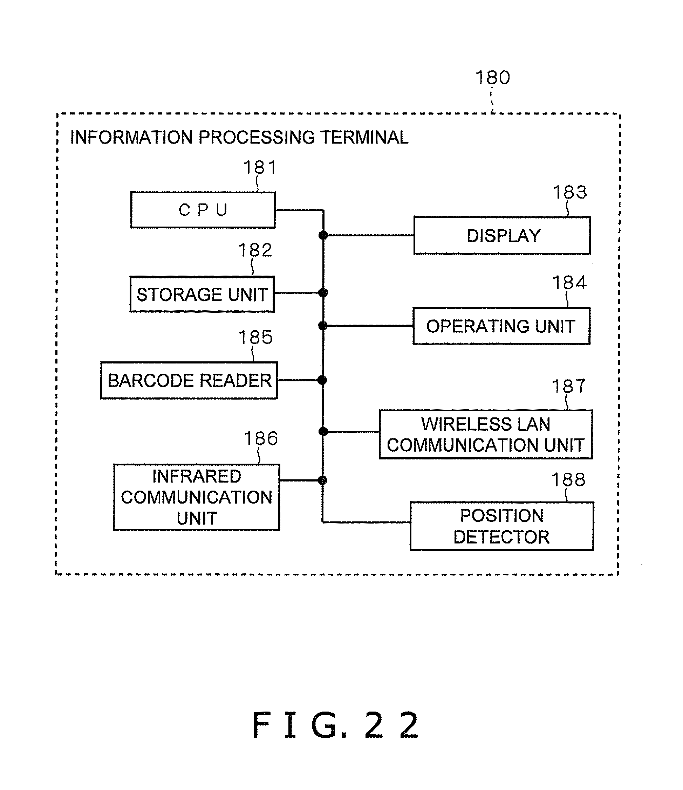

FIGS. 21 and 22 are views showing the configuration of the ESL server 10 and the information processing terminal 180, respectively, according to a second embodiment of the present invention. In the electronic shelf label system 1 according to the second embodiment, the position of a worker who is utilizing the information processing terminal 180 is detected, and the activation target group, i.e., the single communication group 420 that includes the position of the worker in the communication area thereof, is specified based on the detection results. The electronic shelf label system 1 according to the second embodiment will be described below with emphasis on the differences thereof with respect to the electronic shelf label system 1 of the first embodiment.

As shown in FIG 21, transceiver position information 104 instead of the translation master 103 is stored in the hard disk 14 of the ESL server 10. The transceiver position information 104 includes position information indicating the positions of all the transceivers 42 arranged in the sales space 90. In the second embodiment, the transceiver position information 104 is used to specify a single communication group 420 that includes the position of the worker in the communication area thereof.

A position detector 188 for detecting the position of the information processing terminal 180 is also provided to the information processing terminal 180, as shown in FIG 22. Since the position of the information processing terminal 180 and the position of the worker carrying the information processing terminal 180 can be considered to be the same, the position detector 188 detects the position of the worker. A six-axis sensor composed of an acceleration sensor and a geomagnetic sensor, for example, is employed as the position detector 188.

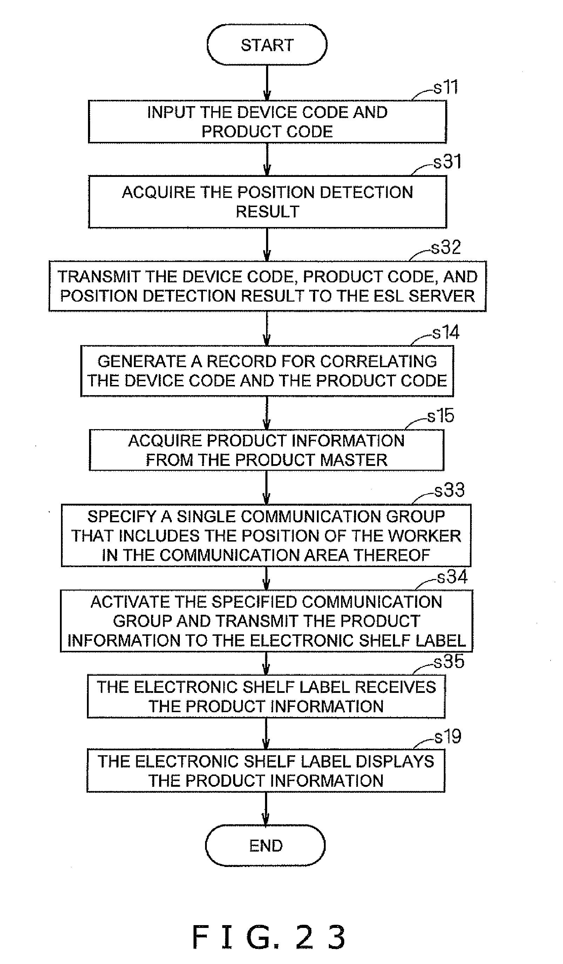

FIG 23 is a flowchart showing the operation of the electronic shelf label system 1 according to the second embodiment during correlation of a product 6 with an electronic shelf label 5. As shown in FIG 23, step s11 is first executed, and the device code of the target electronic shelf label 5 and the product code of the target product 6 are inputted to the CPU 181 of the information processing terminal 180.

In the next step s31, the CPU 181 acquires the position detection result of the position detector 188. This position detection result indicates the position of the worker carrying the information processing terminal 180.

The device code and product code inputted to the CPU 181, and the position detection result acquired by the CPU 181 are transmitted in step s32 from the wireless LAN communication unit 187 to the ESL server 10 via the AP 170, and received by the data communication unit 17 of the ESL server 10. The device code, product code, and position detection result received by the data communication unit 17 are inputted to the CPU 11.

In the ESL server 10, step s14 described above is executed, and a single record 102a is generated in the link file 102 for correlating the device code and product code inputted to the CPU 11. Step s15 described above is then executed, and the CPU 11 acquires the product information of the target product 6 from the product master 101.

In the next step s33, the CPU 11 specifies the communication group 420 that includes the position of the worker in the communication area thereof as the activation target group on the basis of the inputted position detection result and the transceiver position information 104 in the hard disk 14. In step s33, the CPU 11 first specifies the position of the worker from the inputted position detection result. The CPU 11 then references the transceiver position information 104 stored in the hard disk 14 and specifies the transceiver 42 that is nearest to the specified position of the worker. The CPU 11 then designates a single communication group 420 that includes the specified transceiver 42 as the activation target group.

In the next step s34, the CPU 11 activates the activation target group via the interface 18 and the base station 41, and causes an infrared signal that includes the inputted device code and the acquired product information to be transmitted by each of the transceivers 42 of the activation target group. The infrared signal transmitted from the transceivers 42 is received in step s35 by an electronic shelf label 5 belonging to the communication area of the transceivers 42.

Step s19 described above is then executed, and the product information of the correlated target product 6 is displayed on the target electronic shelf label 5, in the manner shown in FIG 10. After displaying the product information, the target electronic shelf label 5 transmits ACK information, and the ACK information is inputted to the ESL server 10. In the ESL server 10 to which the ACK information is inputted, the CPU 11 determines that the activation target group is capable of communicating with the target electronic shelf label 5, and the CPU 11 registers the communication group number of the activation target group in the single record 102a generated in step s14.

The communication group 420 that includes the position of the worker in the communication area thereof is thus specified as the activation target group on the basis of the results of detecting the position of the worker who is utilizing the information processing terminal 180 in the electronic shelf label system 1 according to the second embodiment. The transceivers 42 belonging to the activation target group transmit the product information in the product master 101 for the product 6 designated by the information processing terminal 180. Consequently, when a worker in the vicinity of an electronic shelf label 5 correlated with the product 6 designates the electronic shelf label 5 in the information processing terminal 180, the communication group 420 that is capable of communicating with the electronic shelf label 5 can be promptly specified, and the product information can be promptly transmitted to the electronic shelf label 5. As a result, it is possible to reduce the amount of time between correlation of the electronic shelf label 5 with the product 6 and display of the product information on the electronic shelf label 5.

Furthermore, since product information can be prevented from being transmitted from communication groups 420 other than the communication group 420 that is capable of communicating with the target electronic shelf label 5, electronic shelf labels 5 that are capable of communicating with other communication groups 420 can be prevented from receiving unnecessary information, and unnecessary power consumption by the electronic shelf labels 5 can be reduced.

In the second embodiment, the position detector 188 is housed in the information processing terminal 180, but a position detector 188 that is separate from the information processing terminal 180 may also be carried by the worker. By attaching the position detector 188 to the nametag of the worker, for example, the worker can easily carry the position detector 188. In this case, the position detection result of the position detector 188 may be inputted to the information processing terminal 180 by using wireless communication and/or wired communication, or the position detection result of the position detector 188 may be inputted directly to the ESL server 10.

The activation target group is specified in the ESL server 10 in the second embodiment, but the activation target group may also be specified in the information processing terminal 180 in the same manner as in the example shown in FIG 16 as described above. In this case, in the information processing terminal 180, the transceiver position information 104 is stored in the storage unit 182, and the CPU 181 specifies the activation target group on the basis of the transceiver position information 104 and the result of position detection by the position detector 188. The communication group number of the activation target group specified in the information processing terminal 180 is then transmitted together with the device code and product code from the information processing terminal 180 to the ESL server 10, and the ESL server 10 causes the product information to be transmitted from the communication group 420 having the indicated communication group number.

A six-axis sensor is also used as the position detector 188 in the second embodiment, but other position detection means may also be used. For example, in a wireless LAN system, the location of a terminal can be specified by the status of communication between an access point and the terminal. Such a method may be used to specify the position of a worker carrying the information processing terminal 180 that communicates with the AP 170.

In the first and second embodiments, the method is described for specifying the communication group 420 that is capable of communicating with an electronic shelf label 5 primarily during new correlation of a product 6 with an electronic shelf label 5.

In a case in which a product 6 already displayed on a product shelf 60 is replaced with a new product 6, and the electronic shelf label 5 attached to the product shelf 60 is re-correlated with the new product 6, since the communication group number of the communication group 420 that is capable of communicating with the electronic shelf label 5 is already registered in the link file 102, the electronic shelf label 5 and the new product 6 are correlated without removing the electronic shelf label 5 from the product shelf 60, and the product information of the new product 6 is transmitted from the transceivers 42 of the communication group 420 that is registered in the link file 102 as being capable of communicating with the electronic shelf label 5. The product information of the new product 6 can thereby be immediately transmitted to the electronic shelf label 5.

When the electronic shelf label 5 is re-correlated with the new product 6, the product code is deleted from the single record 102a of the link file 102 in which the device code of the electronic shelf label 5 is registered, and the product code of the new product 6 is then registered in the single record 102a.

When the product 6 is replaced, in a case in which several days elapse between removal of the old product 6 and display of the new product 6, the electronic shelf label 5 for which the correlation with the old product 6 is cancelled, i.e., the electronic shelf label 5 for which the product code is deleted from the single record 102a of the link file 102 in which the device code is registered, remains attached to the product shelf 60 and is not returned to the back room. Once the new product 6 is delivered, the electronic shelf label 5 and the new product 6 are then correlated in the same manner as described above, and the product information for the new product 6 is then transmitted from the transceivers 42 of the communication group 420 that is registered in the link file 102 as being capable of communicating with the electronic shelf label 5. The product information of the new product 6 can thereby be immediately transmitted to the electronic shelf label 5. When an electronic shelf label 5 for which the correlation to an old product 6 has been cancelled is left attached to the product shelf 60, the display of the electronic shelf label 5 may be black, or a message such as "Preparing" or "Welcome" may be displayed on the electronic shelf label 5.

## Claims

1. An electronic shelf label system comprising:
a plurality of electronic shelf labels for displaying product information relating to a product,
the electronic shelf labels being disposed in the vicinity of said product;
a storage unit for storing a product master in which product information is registered for each product;
a plurality of transmitters for transmitting the product information in said product master to said electronic shelf labels belonging to a communication area of a transmitter, the communication areas being mutually different;
a transmission controller for dividing said plurality of transmitters into a plurality of communication groups and controlling said plurality of transmitters in units of communication groups;
a designating unit for designating a product and said electronic shelf label disposed in the vicinity of said product, the designating unit being provided to a portable information processing device;
an input unit for receiving inputting of position specification information for specifying the position of a worker who is utilizing said information processing device;
a link unit for correlating the product and said electronic shelf label designated by said designating unit;
a product information acquiring unit for acquiring product information for the product designated by said designating unit from said product master; and
a specifying unit for specifying as an activation target group a communication group,
among said plurality of communication groups, that includes the position of said worker in the communication area thereof on the basis of said position specification information received by said input unit; wherein
said transmission controller is configured to cause the product information acquired by said product information acquiring unit to be transmitted by a transmitter, among said plurality of transmitters, that belongs to said activation target group.

2. The electronic shelf label system according to claim 1, wherein
a guide sign for providing guidance for a product sales floor is provided for each department of the sales floor in a product sales space in which said electronic shelf labels are placed; said guide signs are configured to display department information indicating the corresponding department of the sales floor;
a second storage unit is further provided for storing a correlation between said department information and said communication group that includes the department of the sales floor indicated by said department information in the communication area thereof;
said input unit is configured to receive the inputting of said department information as inputting of said position specification information; and
said specifying unit is configured to specify said communication group corresponding to said department information received by said input unit and designates said communication group as said activation target group on the basis of said correlation.

3. The electronic shelf label system according to claim 1, wherein
a plurality of product shelves on which products are placed are provided in the space in which said electronic shelf labels are placed;
said plurality of product shelves are configured to indicate a shelf number thereon; a second storage unit is further provided for storing a correlation between said shelf number and said communication group that includes the position of said product shelf specified by said shelf number in the communication area thereof;
said input unit is configured to receive the inputting of said shelf number as inputting of said position specification information; and
said specifying unit is configured to specify said communication group corresponding to said shelf number received by said input unit and designates said communication group as said activation target group on the basis of said correlation.

4. The electronic shelf label system according to claim 1, wherein
at least, product identification information for identifying said products is indicated by the products in the space in which said electronic shelf labels are placed, or said electronic shelf labels correlated with the products are configured to indicate product identification information for identifying said products;
a second storage unit is further provided for storing a correlation between a product and said communication group that is capable of communicating with said electronic shelf label correlated with said product;
said input unit is configured to receive the inputting of said product identification information of the product correlated with said electronic shelf label as inputting of said position specification information; and
said specifying unit is configured to specify said communication group corresponding to the product specified by said product identification information received by said input unit and designates said communication group as said activation target group on the basis of said correlation.

5. The electronic shelf label system according to claim 1, wherein
said electronic shelf labels are configured to indicate hard identification information for identifying said electronic shelf labels thereon;
a second storage unit is further provided for storing a correlation between said electronic shelf label correlated with a product and said communication group that is capable of communicating with said electronic shelf label;
said input unit is configured to receive the inputting of said hard identification information of said electronic shelf label correlated with a product as inputting of said position specification information; and
said specifying unit is configured to specify said communication group corresponding to said electronic shelf label specified by said hard identification information received by said input unit and designates said communication group as said activation target group on the basis of said correlation.

6. The electronic shelf label system according to claim 1, wherein
said electronic shelf label correlated with a product is configured to display second position specification information for specifying the position of said electronic shelf label; and said input unit is configured to receive the inputting of said second position specification information as inputting of said position specification information.

7. The electronic shelf label system according to claim 6, wherein
the product sales floor in the product sales space in which said electronic shelf labels are placed is divided into a plurality of departments;
said electronic shelf label correlated with a product is configured to display, as said second position specification information, department information indicating the sales floor department in which said electronic shelf label is placed;
a second storage unit is further provided for storing a correlation between said department information and said communication group that includes the sales floor department indicated by said department information in the communication area thereof;
said input unit is configured to receive the inputting of said department information as inputting of said position specification information; and
said specifying unit is configured to specify said communication group corresponding to said department information received by said input unit and designates said communication group as said activation target group on the basis of said correlation.

8. The electronic shelf label system according to claim 6, wherein
a plurality of product shelves on which products are placed are provided in the space in which said electronic shelf labels are placed;
a shelf number is assigned to each of said plurality of product shelves;
said electronic shelf label correlated with a product is configured to display the shelf number of the product shelf on which said product is placed as said second position specification information;
a second storage unit is further provided for storing a correlation between said shelf number and said communication group that includes the position of said product shelf specified by said shelf number in the communication area thereof;
said input unit is configured to receive the inputting of said shelf number as the inputting of said position specification information; and
said specifying unit is configured to specify said communication group corresponding to said shelf number received by said input unit and designates said communication group as said activation target group on the basis of said correlation.

9. The electronic shelf label system according to claim 6, wherein
said electronic shelf label correlated with a product is configured to display, as said second position specification information, communication-capable group information indicating said communication group that is capable of communicating with said electronic shelf label; said input unit is configured to receive the inputting of said communication-capable group information as the inputting of said position specification information; and
said specifying unit is configured to designate as said activation target group said communication group indicated by said communication-capable group information received by said input unit.

10. The electronic shelf label system according to any of claims 1 through 9, wherein
said input unit is provided to said information processing device.

11. An electronic shelf label system comprising:
a plurality of electronic shelf labels for displaying product information relating to a product,
the electronic shelf labels being disposed in the vicinity of said product;
a storage unit for storing a product master in which product information is registered for each product;
a plurality of transmitters for transmitting the product information in said product master to said electronic shelf labels belonging to a communication area of a transmitter, the communication areas being mutually different;
a transmission controller for dividing said plurality of transmitters into a plurality of communication groups and controlling said plurality of transmitters in units of communication groups;
a designating unit for designating a product and said electronic shelf label disposed in the vicinity of said product, the designating unit being provided to a portable information processing device;
a position detector for detecting the position of a worker who is utilizing said information processing device;
a link unit for correlating the product and said electronic shelf label designated by said designating unit;
a product information acquiring unit for acquiring product information for the product designated by said designating unit from said product master; and
a specifying unit for specifying as an activation target group a communication group,
among said plurality of communication groups, that includes the position of said worker in the communication area thereof on the basis of detection results produced by said position detector; wherein
said transmission controller is configured to cause the product information acquired by said product information acquiring unit to be transmitted by a transmitter, among said plurality of transmitters, that belongs to said activation target group.
